# EUROPEAN PATENT SPECIFICATION

(11) **EP 4 285 116 B1**
(45) Date of publication and mention of the grant of the patent: **11.11.2026**
(21) Application number: 22744968.3
(22) Date of filing: 28.01.2022
(51) Int. Cl.: G01N 30/06, G01N 1/40, G01N 30/12

(54) **METHODS AND SYSTEMS FOR CONCENTRATING A GAS SAMPLE**
VERFAHREN UND SYSTEME ZUR KONZENTRATION EINER GASPROBE
PROCÉDÉS ET SYSTÈMES DE CONCENTRATION D'UN ÉCHANTILLON DE GAZ

(30) Priority: 28.01.2021 US 202163142718 P
(43) Date of publication of application: 06.12.2023
(73) Proprietor: Mécanique Analytique Inc., Thetford Mines, QC G6G 7W1 (CA)
(72) Inventor: GAMACHE, Yves, Québec G6G 7W1 (CA); LAMONTAGNE, Andre, Québec G6G 7W1 (CA); LANGEVIN, Marc-Antoine, Québec G6G 7W1 (CA)
(74) Representative: Biallo, Dario
(86) International application number: PCT/CA2022/050116
(87) International publication number: WO 2022/160051

(56) References cited:
- KR-B1- 100 487 896
- KR-B1- 100 846 190
- US-A1- 2014 318 217
- OMS M. T., JONGEJAN P. A. C., VELTKAMP A. C., WYERS G. P., SLANINA J.: "Continuous Monitoring of Atmospheric HCl, HNO 2 , HNO 3 and SO 2 by Wet-Annular Denuder Air Sampling with On-Line Chromatographic Analysis", INTERNATIONAL JOURNAL OF ENVIRONMENTAL ANALYTICAL CHEMISTRY, TAYLOR & FRANCIS LTD., GB, vol. 62, no. 3, 1 March 1996 (1996-03-01), GB , pages 207 - 218, XP055958021, ISSN: 0306-7319, DOI: 10.1080/03067319608028134

## Description

### TECHNICAL FIELD

The technical field generally relates to gas chromatography, and more particularly to methods and systems for concentrating a gas sample.

### BACKGROUND

Techniques for concentrating gas samples for analytical measurement are known in the art. Numerous applications require the measurement of impurities in the range of ppt and ppb. While such measurements may be achieved with detector having a relatively high sensitivity, characterizing samples having a relatively low concentration without losing some of it in the analytical system remains challenging. For example, sulfur-based compounds having a relatively low concentration are difficult to characterize, because such compounds are very reactive.

Existing techniques for concentrating gas samples generally rely on thermal desorbers or thermal desorption systems. Examples of commercially available thermal desorption systems include the UNITY-xr and TD100-xr from Markes International, the TD-30 Series for Shimadzu, the TurboMatrix from Perkin Elmer, the CDS9300 from CDS International, the TD-5 from Scientific Instrument Services, the Master TD from DANI and the M-TD from Airsense Analytics.

Despite some technical variations from one model to another, the working principle is substantially the same. The sample, typically from a sampling bag or a sampling trap, is injected in the thermal desorption unit and it is concentrated on a clean "cold trap" or "focusing trap". The trap is then isolated and heated to a release temperature. The sample is then injected in a chromatographic method via a split or a splitless outlet. In such systems, the trap remains inline with the chromatographic column, which is accompanied with multiple drawbacks. Indeed, it is well known that such a method is highly sensitive to small leaks of the concentration system or bleeding from the trapping material(s). Since the carrier gas flows through the trap before reaching the column and the detector, the size and shape of the trap, as well as the trapping material granulometry are limited, notably to limit undesired flow variations and to minimize noise in the chromatogram.

Existing technologies are designed for laboratory use, and so cannot be used or adapted for process use. In addition, these technologies are also not suitable for the analysis of light hydrocarbons and most inorganic gases, which include the permanent gases (H₂, O₂, N₂, CH₄, CO, CO₂), SO₂, HCl, and many other.

Therefore, challenges remain in the field of techniques for concentrating a gas sample.

KR100487896B1 describes a device for injecting a sample to be analyzed into a device for analyzing volatile organic compounds in soil, water, or the atmosphere.

KR100846190B1 describes a multi-Sample injection apparatus for gas chromatography using vacuum thermal desorption.

### SUMMARY

The present techniques generally relate to obtaining or producing a concentrated gas sample from a non-concentrated gas sample with a trap that is not inline with a chromatographic method and injecting a controlled volume of the concentrated gas sample in a sample loop including a valve or similar chromatographic component through a sample line (i.e., the traps are indirectly connected to the chromatographic method or the traps are connected to the chromatographic method through an intermediate, such as a sample loop, as it will be described herein).

In accordance with one aspect, there is provided a method according to claim 1 for concentrating a gas sample.

In some embodiments, said preparing the concentrated gas sample from the non-concentrated gas sample includes heating the traps to reach a trapping temperature.

In some embodiments, the trapping temperature is room temperature.

In some embodiments, the trapping temperature is different than room temperature.

In some embodiments, said preparing the concentrated gas sample from the non-concentrated gas sample includes circulating the non-concentrated gas sample in the trap after said heating the traps to reach the trapping temperature.

In some embodiments, the method further includes flushing the trap after said circulating the non-concentrated gas sample in the trap.

In some embodiments, said flushing the trap is performed at a relatively low temperature.

In some embodiments, said preparing the concentrated gas sample from the non-concentrated gas sample includes isolating the trap.

In some embodiments, the method further includes conditioning the sample line to reach equilibrium conditions before said controlling the temperature of the internal volume of the trap to reach the release temperature.

In some embodiments, the method further includes determining sampling parameters of the gas sample.

In some embodiments, the sampling parameters include at least one of a sampling time, a sample flow and a pressure.

In some embodiments, said controlling the temperature of the internal volume includes heating the internal volume of the trap.

In some embodiments, said injecting the concentrated gas sample includes releasing the concentrated gas sample as a pulse.

In some embodiments, said operating the sample loop includes releasing only a portion of the pulse in the chromatographic method.

In some embodiments, the portion of the pulse corresponds to a most concentrated slice of the pulse.

In some embodiments, the method further includes cleaning the trap.

In some embodiments, said cleaning the trap includes circulating a flow of pure gas within the internal volume of the trap.

In some embodiments, the method further includes heating and maintaining the flow of pure gas at a relatively high temperature.

In some embodiments, said cleaning the trap is performed while the trap is maintained under vacuum conditions.

In some embodiments, the further includes cleaning at least one of the sample line and the sample loop.

In some embodiments, said cleaning said at least one of the sample line and the sample loop includes isolating the trap from said at least one of the sample line and the sample loop, and maintaining said at least one of the sample line and the sample loop under vacuum conditions.

In some embodiments, said operating the sample loop to release the concentrated gas sample includes circulating the concentrated gas sample in the sample line towards the sample loop.

In accordance with another non-claimed aspect, there is provided a method for concentrating a gas sample, the method including: preparing a concentrated gas sample from a non-concentrated gas sample with a trap, the trap having an internal volume, said preparing the concentrated gas sample including heating the internal volume of the trap to reach a trapping temperature; when the trapping temperature is reached, circulating the non-concentrated gas sample in the trap; and isolating the trap; conditioning a sample line to reach equilibrium, the sample line operatively connecting an output of the trap with an input of a sample loop; heating the internal volume of the trap to reach a release temperature; when the equilibrium is reached in the sample line and the release temperature is reached in the internal volume of the trap, injecting the concentrated gas sample in the sample loop through the sample line; and operating the sample loop to release the concentrated gas sample contained in the sample loop in a chromatographic method, wherein the trap is not inline with the chromatographic method.

In some embodiments, the trapping temperature is room temperature.

In some embodiments, the trapping temperature is different than room temperature.

In some embodiments, the method further includes flushing the trap after said circulating the non-concentrated gas sample in the trap.

In some embodiments, said flushing the trap is performed at a relatively low temperature.

In some embodiments, the method further includes determining sampling parameters of the gas sample.

In some embodiments, the sampling parameters include at least one of a sampling time, a sample flow and a pressure.

In some embodiments, said injecting the concentrated gas sample includes releasing the concentrated gas sample as a pulse.

In some embodiments, said operating the sample loop includes releasing only a portion of the pulse in the chromatographic method.

In some embodiments, the portion of the pulse corresponds to a most concentrated slice of the pulse.

In some embodiments, the method further includes cleaning the trap.

In some embodiments, said cleaning the trap includes circulating a flow of pure gas within the internal volume of the trap.

In some embodiments, the method further includes heating and maintaining the flow of pure gas at a relatively high temperature.

In some embodiments, said cleaning the trap is performed while the trap is maintained under vacuum conditions.

In some embodiments, the method further includes cleaning at least one of the sample line and the sample loop.

In some embodiments, cleaning said at least one of the sample line and the sample loop includes isolating the trap from said at least one of the sample line and the sample loop, and maintaining said at least one of the sample line and the sample loop under vacuum conditions.

In accordance with another aspect, there is provided a system according to claim 12 for concentrating a gas sample.

In some embodiments, the system further includes an additional trap.

In some embodiments, the temperature-controlled enclosure houses the additional trap.

In some embodiments, the system further includes an additional temperature-controlled enclosure housing the additional trap.

In some embodiments, the additional trap has a respective internal volume, said respective internal volume being similar to the internal volume of the trap.

In some embodiments, the additional trap has a respective internal volume, said respective internal volume being different than the internal volume of the trap.

In some embodiments, at least one of the trap and the additional trap includes at least one trapping material.

In some embodiments, said at least one trapping material is selected from the group consisting of: zeolites, molecular sieves, silica gels, porous glasses, porous polymers, activated charcoals, carbon blacks, alumina, porous metal oxides, metal-organic frameworks, alloys and metal powders.

In some embodiments, at least one of the trap and the additional trap includes at least one catalyst material.

In some embodiments, said at least one catalyst material is selected from the group consisting of: alumina and nickel.

In some embodiments, the internal volume of the trap ranges from about 25 microliters to about 100 milliliters.

In some embodiments, the respective internal volume of the additional trap ranges from about 25 microliters to about 100 milliliters.

In some embodiments, the trap and the additional trap are connected in series.

In some embodiments, the trap and the additional trap are connected in parallel.

In some embodiments, the system further includes a supplemental temperature-controlled enclosure, the supplemental temperature-controlled enclosure housing the additional trap.

In some embodiments, the temperature-controlled enclosure and the supplemental temperature-controlled enclosure are configured to be operated at same operating conditions.

In some embodiments, the temperature-controlled enclosure and the supplemental temperature-controlled enclosure are configured to be operated at different operating conditions.

In accordance with another non-claimed aspect, there is provided a method for concentrating a gas sample. The method includes preparing a concentrated gas sample from a non-concentrated gas sample with a trap; heating the trap to reach a release temperature (or controlling the temperature of the volume contained or enclosed in the trap to reach a release temperature); injecting the concentrated gas sample in a sample line towards a sample loop, the sample line and sample loop being at a sub-atmospheric pressure; and operating the sample loop to release the concentrated gas sample contained in the sample loop in a chromatographic method.

In some embodiments, the concentrated gas sample may be released as a pulse. In some embodiments, the pulse may be generally injected in the chromatographic method when it reaches the sample loop of the injection valve. In some embodiments, the pulse may be completely injected in the GC methods. In some embodiments, only a portion of the pulse may be injected in the GC method, for example the most concentrated slice of the pulse.

In accordance with another non-claimed aspect, there is provided a method for concentrating a gas sample. The method includes preparing a concentrated gas sample from a non-concentrated gas sample with a trap. The step of preparing the concentrated gas sample includes heating the trap to reach a trapping temperature; when the trapping temperature is reached, circulating the non-concentrated gas sample in the trap; and isolating the trap. The method also includes conditioning a sample line to reach equilibrium, the sample line operatively connecting an output of the trap with an input of a sample loop; heating the trap to reach a release temperature; when the equilibrium is reached in the sample line and the release temperature is reached, injecting the concentrated gas sample in the sample loop; and operating the sample loop to release the concentrated gas sample contained in the sample loop in a chromatographic method.

In some embodiments, the concentrated gas sample may be released as a pulse. In some embodiments, the pulse may be generally injected in the chromatographic method when it reaches the sample loop of the injection valve. In some embodiments, the pulse may be completely injected in the GC methods. In some embodiments, only a portion of the pulse may be injected in the GC method, for example the most concentrated slice of the pulse.

In accordance with another non-claimed aspect, there is also provided a system for preconcentrating a gas sample, the system including a trap having a gas inlet and a gas outlet, the trap being configured to receive a non-concentrated gas sample through the gas inlet, produce a concentrated gas sample and output the concentrated gas sample through the gas outlet; a temperature-controlled enclosure housing the trap for heating the trap; a sample line operatively connected to the gas outlet; a sample loop having a sample loop inlet connected to the sample line and a sample loop outlet configured to be operatively connected to a chromatographic method, the sample loop comprising a valve, the valve being configured to be actuated, such that the concentrated gas sample is released towards the chromatographic method; and a pump operatively connected to the sample loop. The system may include a port configured to vent the matrix gas.

Other objects, features, and advantages of the present description will become more apparent upon reading of the following non-restrictive description of specific embodiments thereof, given by way of example only with reference to the appended drawings. Although specific features described in the above summary and in the detailed description below may be described with respect to specific embodiments or aspects, it should be noted that these specific features can be combined with one another unless stated otherwise.

### BRIEF DESCRIPTION OF THE DRAWINGS

Figure 1 illustrates a system for concentrating a gas sample, in accordance with one embodiment, the system being in a configuration for performing a cleaning step.
Figure 2 illustrates the system of Figure 1, the system being in a configuration for circulating the gas sample in traps.
Figure 3 illustrates the system of Figure 1, wherein the traps are isolated.
Figure 4A) shows the analyte dispersion and pressure when the trap is isolated, with the first chromatographic line being maintained under sub-atmospheric pressure. Figure 4B) shows illustrated the analyte dispersion after the step of releasing the concentrated gas sample, once the equilibrium has been reached.
Figure 5 depicts a schematic representation of the system of Figure 1 with a vacuum pump being isolated and the traps being in their release position.
Figure 6 illustrates a sample being released as a pulse and pushed with a carrier gas.
Figure 7 (top portion) shows a schematic representation of an embodiment of the system in which a pulse gas is injected in a chromatographic method. Figure 7 (bottom portion) is a representation of the pressure increase associated with the injection of the pulse of gas.
Figure 8 is a schematic representation of an embodiment in which the analytes are released from the traps as a pulse with the vacuum pump still inline
Figure 9 shows an embodiment wherein the analytes are released from the traps as a pulse without a vacuum pump.
Figure 10 is a schematic representation of an embodiment wherein the concentrated gas sample is released in a direction opposite the direction of the sampling.
Figure 11 shows a chromatogram acquired for 823 ppb CO₂ in a matrix gas of argon, injected directly in the chromatographic method, as it would be done using the techniques from prior art (blue line). Figure 11 also shows a chromatogram of a concentrated sample obtained using the method and system herein described (red line).
Figure 12 presents an example of results obtained with saturated traps.
Figure 13 presents an example of results obtained with unsaturated traps.
Figure 14 is a plot of a peak intensity as a function of the CO₂ concentration.
Figure 15 illustrates the effect of a step of matrix flushing.
Figure 16 compares a typical inline thermal desorption system with an embodiment of the system for concentrating a gas sample according to the present techniques. The top portion corresponds to the configuration of prior art, while the bottom portion illustrates the configuration according to the present disclosure.
Figure 17 shows some results associated with injecting the concentrated sample from a sample loop instead of having the trap inline with the chromatographic method.
Figure 18 shows the results obtained with a reverse configuration of the traps.
Figure 19 illustrates that trap orientation and release direction have an impact on the chromatography results.
Figure 20 compares a chromatogram obtained with the present techniques and chromatograms obtained with systems from prior art.
Figure 21 shows some of the components affecting the internal volume of the system.
Figure 22 illustrates results of a quantification of a sample including sulfur, with and without hydrogenation catalyst.
Figure 23 presents results obtained for high-purity argon measured with the present techniques.
Figure 24 shows one configuration of the system for concentrating a gas sample.
Figure 25 shows another configuration of the system for concentrating a gas sample.
Figure 26 shows the system of Figure 1 in a configuration for injecting the concentrated gas sample into the chromatographic method.
Figure 27 shows the effect of using traps having a relatively large internal volume or a relatively small internal volume.

### DETAILED DESCRIPTION

In the present description, similar features in the drawings have been given similar reference numerals. To avoid cluttering certain figures, some elements may not be indicated if they were already identified in a preceding figure. It is appreciated that the elements of the drawings are not necessarily depicted to scale, since emphasis is placed on clearly illustrating the structure and operation of the present embodiments. Furthermore, positional descriptors indicating the location and/or orientation of one element with respect to another element are used herein for ease and clarity of description. Unless otherwise indicated, these positional descriptors should be taken in the context of the figures and should not be considered limiting. It will be understood that such spatially relative terms are intended to encompass different orientations in the use or operation of the present embodiments, in addition to the orientations exemplified in the figures.

In the present description, the terms "a", "an", and "one" are defined to mean "at least one", that is, these terms do not exclude a plural number of elements, unless stated otherwise.

Terms such as "substantially", "generally", and "about", that modify a value, condition, or characteristic of a feature of an exemplary embodiment, should be understood to mean that the value, condition, or characteristic is defined within tolerances that are acceptable for the proper operation of this exemplary embodiment for its intended application or that fall within an acceptable range of experimental error. In particular, the term "about" generally refers to a range of numbers that one skilled in the art would consider equivalent to the stated value (e.g., having the same or equivalent function or result). In some instances, the term "about" means a variation of ±10 percent of the stated value. It is noted that all numeric values used herein are assumed to be modified by the term "about", unless stated otherwise.

Unless stated otherwise, the terms "connected", "coupled", and derivatives and variants thereof, refer to any connection or coupling, either direct or indirect, between two or more elements. The connection or coupling between the elements may be, for example, mechanical, optical, electrical, thermal, chemical, fluidic, magnetic, logical, operational, or any combination thereof.

In the present description, the terms "gas sample", "sample", synonyms and derivatives thereof are intended to refer to any gaseous substance known, expected, or suspected to contain analytes. Gas samples can be broadly classified as organic, inorganic, or biological. Gas samples can include a mixture of analytes and non-analytes. The term "analyte" is intended to refer to any component of interest in a gas sample that can be detected according to the present techniques, while the term "non-analyte" is intended to refer to any sample component for which detection is not of interest in a given application. Non-limiting examples of non-analytes include, to name a few, water, oils, solvents, and other media in which analytes may be found, as well as impurities and contaminants. It is appreciated that in some instances, terms such as "component", "compound", "constituent", and "species" may be used interchangeably with the term "analyte". In some implementations, the analytes of interest may include volatile organic compounds (VOCs). VOCs are organic chemicals that readily produce vapors at ambient temperatures and are therefore emitted as gases from certain solids or liquids. VOCs include both human-made and naturally occurring chemical compounds. Non-limiting examples of VOCs include, to name a few, aromatics, alkenes, bromides and iodides, sulfides and mercaptans, organic amines, ketones, ethers, esters and acrylates, alcohols, aldehydes, and alkanes, and alkyl halides. It is appreciated, however, that the present technique may also be used to detect certain volatile inorganic compounds and semi-volatile organic compounds.

Various embodiments disclosed herein may be used in gas chromatography (GC) applications. In the present description, the term "gas chromatography" refers to an analytical or process technique for separating a gas sample or mixture into its individual components and for analyzing qualitatively and quantitatively the separated sample components. In most GC applications, the sample is transported in a carrier gas to form a mobile phase. The mobile phase is then carried through a stationary phase, which is located in a column or another separation device. The mobile and stationary phases are selected so that the components of the gas sample transported in the mobile phase exhibit different interaction strengths with the stationary phase. This leads to different sample components having different retention times through the system, where the sample components that are strongly interacting with the stationary phase move more slowly with the flow of the mobile phase and elute from the column later than the sample components that are weakly interacting with the stationary phase. As the sample components separate, they elute from the column and enter a detector. The detector is configured to generate an electrical signal whenever the presence of a sample component is detected. The magnitude of the signal is proportional to the concentration level of the detected component. The measurement data can be processed by a computer to obtain a chromatogram, which is a time series of peaks representing the sample components as they elute from the column. The retention time of each peak is indicative of the composition of the corresponding eluting component, while the peak height or area conveys information of the amount or concentration of the eluting component. It is appreciated, however, that various other embodiments disclosed herein may be used in technical fields other than GC. Non-limiting examples of such technical fields include, to name a few, gas purification systems, gas leak detection systems, and online gas analyzers without chromatographic separation.

The present techniques may be used or implemented in various fields that may benefit from concentrating a gas sample. It will be noted that expressions such as "concentrating", "concentration", "preconcentrating" and "preconcentration" as well synonyms and derivatives thereof generally refer to increasing a ratio of analyte(s) to a matrix gas, altogether forming the gas sample. This may be achieved by increasing the number of analytes in the gas sample with respect to the matrix gas, and/or decreasing the amount of the matrix gas in the gas sample with respect to the analytes.

It will be noted that the text and schematics may refer to a "chromatographic method", and that such a chromatographic method is typically located after or downstream from the preconcentration system. The chromatographic method could include detector(s), valve(s), column(s), analytical system(s), device(s), other chromatographic component(s), and/or any combinations thereof.

The method and system presented in the present disclosure may offer an alternative or an improvement to typical thermal desorption systems. As it will be described in greater detail below, the method and system, and various embodiments thereof, disclosed herein broadly include obtaining or producing a concentrated gas sample from a non-concentrated gas sample with a trap that is not inline with a chromatographic method (or indirectly connected thereto) and injecting a controlled volume of the concentrated gas sample in a sample loop including a valve or similar chromatographic component through a sample line. The sample loop may then be operated to release the concentrated gas sample in the chromatographic method. It should be noted that, in some implementations, the concentrated gas sample may be directly injected in a detector (i.e., without circulating through a chromatographic column). This approach may mitigate or resolve common issues associated with thermal desorption systems from prior art, which generally use inline traps. The method and system that will be described may be used in a broad variety of chromatographic applications, including, for example and without being limitative, process use.

### Limitations of existing solutions

Existing technologies for concentrating a gas sample are associated with numerous drawbacks and challenges. Nonlimitative examples of challenge or factors to be taken into account include the limit of detection and the sensitivity of available analytical systems, the potential applications, unwanted perturbations in the gas flow, reactive molecules, the complexity of some chromatographic systems, reactive matrices and compatibility issues. Each of these challenges will now be briefly presented.

The limit of detection of analytical systems for gases are generally limited by the chromatographic method or the detector. Of note, due to technological limitations, the limit of detection of a given detector could hardly be improved.

Existing preconcentration systems can only be used in laboratory applications. Indeed, existing preconcentration systems are simply not designed for process monitoring. For example, existing preconcentration systems generally require relatively frequent maintenance. In addition, only one trap may be used or operated at a time, which limits the number of analytes that can be analysed with one preconcentration system.

Available preconcentration systems or thermal desorption systems are typically used inline with the chromatographic method. This configuration may be problematic, because of flow restrictions, potential bleeding and increased noise caused by some trapping materials. The trapping materials may also cause an undesired chromatographic separation that may affect the detection and/or the shape of the collected peak(s). Existing trapping materials may also cause peak separation or negatively impact the peak resolution, thereby affecting the results. In addition, the operation of some chromatographic components (*e.g.*, when a valve is actuated) may affect the gas flow, and thus have a significant impact on the outputted chromatogram. It may be complicated or even impossible to sample a gas flow during the acquisition of the chromatogram with existing technologies, which results in a longer analysis time. Existing preconcentration systems are also is limited to small traps, because large injection volume is incompatible with chromatographic methods using small gas volumes, such as, for example, capillary GC columns.

Trace amounts of reactive molecules, such as, for example, sulfur-based compounds, can be adsorbed or react in the sampling lines, between the process line and the analytical system, which is associated with higher detection limits and imprecise results. Typical preconcentration systems are generally located close to the analytical system in order to mitigate this factor.

In some complex chromatographic systems, it may be required to separate the analytes from the matrix gas. This may be challenging when the concentration of the matrix gas is much greater than the concentration of the analytes.

It is known that highly reactive matrix can cause damages to analytical systems or be unsafe for the users. Existing analytical systems used for the analysis of dangerous gases must be placed in enclosures (*e.g*., ATEX Cabinet) to comply with regulations, enhance the safety of the users and/or avoid fire hazards.

Existing technologies are also not compatible with some chemical species or chemical substances. For example, available preconcentration system cannot be used for the preconcentration of light hydrocarbons and most inorganic gases. As such, existing solutions cannot be used to concentrate gas samples including permanent gases such as, for example, and without being limitative, H₂, O₂, N₂, CH₄, CO CO₂, and the light hydrocarbons (*i.e*., methane (C1), ethane (C2), propane (C3), and the butanes (C4)).

### System for concentrating a gas sample

Now turning to Figures, different embodiments of a system 100 for concentrating a gas sample will be presented.

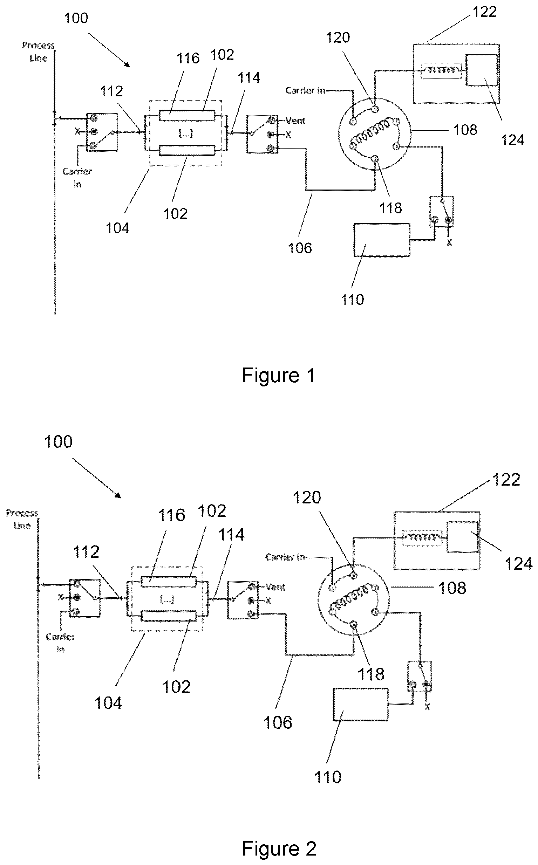

As illustrated in Figures 1 to 3, the system 100 for concentrating the gas sample includes one or more traps 102 (hereinafter referred to as the "traps"), a temperature-controlled enclosure 104 (sometimes referred to as a "heated box" in) housing the traps, a sample line 106, a sample loop 108 and a pump 110.

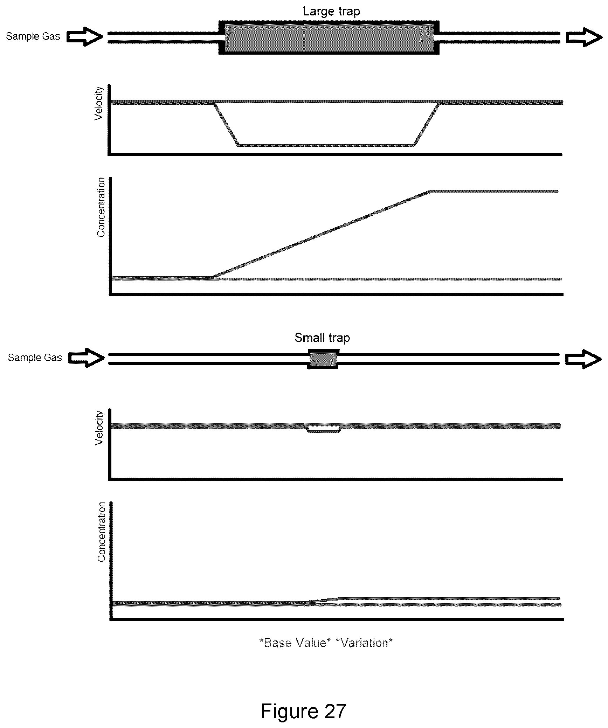

The traps 102 have a gas inlet 112 and a gas outlet 114. The traps 102 are configured to receive a non-concentrated gas sample through the gas inlet 112, produce a concentrated gas sample and output the concentrated gas sample through the gas outlet 114. The traps 102 may include one or more trapping materials. The trapping materials are selected to be compatible with the analytes and the matrix gas (*i.e*., the sample gas). Nonlimitative examples of trapping materials may include zeolites, molecular sieves, silica gels, porous glasses, porous polymers, activated charcoals, carbon blacks, alumina, porous metal oxides, metal-organic frameworks (MOFs), alloy or metal powders, or any other materials having the required affinity to interact with the gas sample. The expression "affinity" herein refers to the tendency of a chemical species to react or interact with another chemical species. Each of the traps 102 generally has an internal volume 116 that is greater than the volume that may be contained in the chromatographic column of a chromatographic method. Of note, in existing thermal desorption systems, the gas contained in the internal volume of the trap is directly injected in the chromatographic column. This configuration will be referred to as an "inline configuration", because the traps of existing systems are typically inline with the chromatographic column of a chromatographic method. As such, existing thermal desorption systems are limited. The trap 102 according to the present disclosure is not inline with the chromatographic method 122, and the system 100 as described herein may include one or more traps 102 having an internal volume 116 several orders of magnitude greater that the volume of the chromatographic column of in the chromatographic method. For example, existing thermal desorption systems typically include a cold trap or a focusing trap having a volume of about 25 microliters to about 400 microliters. The system 100 presented in the current disclosure may include, in some embodiments, traps 102 each having an internal volume 116 ranging from about 25 microliters to about 100 milliliters, thereby allowing for much larger volumes than existing solutions. In other embodiments, the internal volume 116 of the traps 102 included in the system as herein described may be up to 1000 times greater than the volume of the chromatographic column included in the chromatographic method. By using a relatively large internal volume 116 for teach trap 102, the proposed techniques allow achieving a better concentration factor, and allows concentrating volumes that are much larger than what would be possible with existing technologies. Figure 27 shows one example of the advantage of using traps 102 having a relatively large volume when compared to a standard trap having a relatively small volume. Depending on the material used in the trap 102, the velocity of some molecules may be slowed down due to interaction with the trapping material or solid phase. With a small trap, *e.g*., such as the one used in existing technologies, this effect is small as the residence time is relatively short, or simply too short for significant interactions to occur. To benefit from an increase in concentration inside the trap, a larger trap, *e.g*., the traps 102 being herein described, is beneficial as the molecules to be concentrated remain in the trap 102 for a longer period of time (in comparison with existing technologies). During this period of time, the concentration inside the large trap 102 increases. Of note, the chromatographic method 122 may include one or more detectors 124.

A nonlimitative example of the impact of using relatively large traps 102 will now be described. This example relates to the concentration of 1 ppm CH₄ in helium. CH₄ is known to be a substance that is difficult to trap. This is the case for most light hydrocarbons or inert gases. Using a Molecular Sieve 5A material, CH₄ velocity can be reduced when compared to helium, which is almost 99.9999% of the sample. Similar to chromatography, when the sample is connected to the trap and allowed to flow for a fix period of time, CH₄ concentration will increase and reach a maximum concentration at a time when CH₄ break through the trap. As one skilled in the art will understand, to achieve a high concentration factor, a large volume is required when the interaction between the analytes and the trapping material is relatively weak. It is not possible to achieve a reasonable or meaningful concentration factor with a small trap for molecules like the permanent gases or light hydrocarbons.

In some embodiments, the traps 102 may also include one or more catalyst material(s) to facilitate or promote one or more chemical reactions. The catalyst material(s) may be used to convert a portion, or an entirety of the analytes present in the gas sample into species that are easier to detect or measure with the chromatographic method or the analytical instruments.

In some embodiments, the catalyst material(s) may be selected to allow converting sulfur-based compounds in H₂S or SO₂. An example of such a material is alumina. In other embodiments, the catalyst material(s)may be selected to allow converting organic compounds in CO₂ or CH₄. An example of such a material is nickel.

It should be noted that while some passages of the current disclosure describe the technology with reference to one trap only, these passages also apply in situations wherein the system includes a plurality of traps. Of note, these traps could be connected in series or in parallel.

The temperature-controlled enclosure 104 houses or encloses the traps 102. The temperature-controlled enclosure 104 may be operated to heat the traps 102 (*i.e.*, increasing the temperature of the internal volume 116 contained or enclosed in the traps 102 to reach a given temperature) or alternatively cool the traps 102 102 (*i.e.*, decreasing the temperature of the internal volume 116 contained or enclosed in the traps 102 to reach a given temperature). Once the appropriate temperature has been reached within the internal volume 116, the temperature-controlled enclosure 104 may be maintained at that given temperature. For instance, the temperature-controlled enclosure 104 may be maintained at a trapping temperature, *i.e*., a temperature at which species are trapped in the trapping materials, or at a release temperature, *i.e*., a temperature at which the traps release the species having been previously trapped, when the analytes have to be measured or characterized. One skilled in the art would have readily understood that the temperature of the temperature-controlled enclosure 104 is adjustable, and so may be increased, decreased or be constant, depending on the requirement of the chromatographic process or method. In some embodiments, the temperature of the temperature-controlled enclosure 104 may be controlled according to a pattern or a sequence, the pattern or sequence including one or more of an increase of the temperature, a decrease of the temperature and a temperature maintenance.

In some embodiments, the system 100 may include one temperature-controlled enclosure 104, which may house one or more traps 102. The traps 102 may be operated at the same operating conditions. In other embodiments, the system 100 may include a plurality of temperature-controlled enclosures 104, each temperature-controlled enclosure housing one or more traps 102. This embodiment may be useful of each temperature-controlled enclosure 104 needs to be heated at different temperatures one from another (*i.e*., the traps 102 may be operated at different operating conditions). In both embodiments, the traps 102 could either be identical or different, depending on the targeted application.

In some embodiments, the temperature-controlled enclosure 104 may be part of or include a modular oven or a gas chromatography modular oven, such as the one described in WO2019109183, the content of which is herein incorporated by reference in its entirety.

The sample line 106 is operatively connected to the gas outlet 114 and to the sample loop 108. The sample loop 108 has a sample loop inlet 118 connected to the sample line 106 and a sample loop outlet 120 configured to be operatively connected to a chromatographic method 122. The sample loop 108 includes a valve or any similar chromatographic components. The valve is configured to be actuated, such that the concentrated gas sample may be released towards the chromatographic method 122. It should be noted that the valve may be in a closed configuration, such that the sample loop 108 is not operatively connected to the chromatographic method 122, or in an open configuration, such that the sample loop 108 is operatively connected to the chromatographic method 122, thereby allowing the injection of the concentrated gas sample in the chromatographic method 122.

The system 100 also includes valves and other chromatographic components to alter, affect, direct, redirect or modify the gas flow and/or its path. It will be noted that the Figures serve an illustrative purpose only and that the conceptual representations illustrated in the Figures could be achieved with any type of valves or chromatographic components Nonlimitative examples of valves are rotary valves, diaphragm valves, sliding valve, and the like. In some embodiments, the traps may be connected to a single PLSV Trap & Release valve commercialized by ASDevices. Any other valves or combinations of valve(s) producing the same effect could also be used. The valves are generally equipped with a purge mechanism, such as, for example, an internal purge mechanism. The purge mechanism may either be plugged, flushed with the same gas as the carrier, maintained under vacuum or simultaneously be flushed and maintained under vacuum. The valves may be connected to electrical, pneumatic or any other actuators known in the art. In some embodiments, the actuators can be controlled via a software that allows manual or automated valve actuation.

The pump 110 is operatively connected to the sample loop 108 and may be used to create a vacuum or provide a relatively low pressure in the sample loop 108 and/or sample line 106. Maintaining the vacuum or the relatively low pressure in the sample line 106 and/r sample loop 108 generally promotes the desorption of the analytes from the traps 102 and helps in keeping the sample line 106 clean between successive gas injections, which may be useful to avoid or at least reduce sample contamination, thereby providing more accurate measurements. Once the gas sample is released from the traps 102, the vacuum or the relatively low pressure in the sample line 102 (generally a sub-atmospheric pressure) helps preventing the reactive analytes to be adsorbed by the internal surface of the chromatographic components included in the sample line 106 and release them.

### Method for concentrating a gas sample

With reference to Figures 1 to 6, a method for concentrating a gas sample will now be described.

At the beginning of the method, the traps 102 of the system 100 should be relatively clean, meaning that no or only traces of the matrix gas, analytes and/or impurities may be present in the traps 102. In the situations wherein the traps are not clean, the method may include a step of cleaning the traps ("traps cleaning step"). A schematic representation of the preconcentration system 100 during the traps cleaning step is shown in Figure 1. In Figure 1, the system 100 includes two traps 102, but the system 100 could of course include any number of traps 102. As illustrated, the traps 102 are cleaned with a flow of pure gas, preferably maintained at a relatively high temperature and optionally using the pump to produce a vacuum. The traps 102 may be filled with a gas. The gas filling the traps 102 may be the same as the GC carrier gas. Alternatively, the traps 102 can be put inline with the sample line 106 and the vacuum pump 110 for cleaning the whole system 100 with a gas flow and vacuum. When the traps 102 are isolated, the section between the output of the traps 102 and the pump 110, which includes the sample line 106 and/or the sample loop 108 may be cleaned using the vacuum only.

The method includes a step of preparing a concentrated gas sample from a non-concentrated gas sample with a trap 102. This step includes heating or cooling the traps 102 to reach a trapping temperature, or otherwise controlling the temperature of the traps 102 to reach the trapping temperature. This may be achieved by controlling the temperature of the temperature-controlled enclosure 104, in order to maintain the traps 102 at the trapping temperature. In some embodiments, the trapping temperature may be the room temperature. In other embodiments, the trapping temperature may be lower than the room temperature. Of course, any other suitable temperatures may be used, depending on the targeted application. The sampling parameters may be determined before, during or after the step of heating the traps. The sampling parameters may include the sampling time, the sample flow and/or the pressure. Once the traps 102 have been heated, the step of preparing the concentrated gas sample includes circulating the non-concentrated gas sample in the traps 102 ("sampling step"). Figure 2 illustrates a schematic representation of a configuration of the system 100 that allows the circulation of the gas sample in the traps 102. The configuration of the system 100 shown in Figure 2 may be referred to as the sampling configuration or position of the system 100.

Circulating the non-concentrated gas sample may be followed by an optional step of flushing the traps 102 ("traps flushing step"). During this step, the traps 102 may be flushed with the same gas as the carrier gas, which may help in reducing the matrix gas content, while still retaining the analytes trapped. This optional step may be achieved when the system 100 is in its sampling configuration. However, one would note that this step is generally performed with traps 102 maintained at relatively low temperatures to avoid desorption of the analytes.

After the sampling step or the traps flushing step, preparing the concentrated gas sample includes isolating the traps 102.

The method then includes a step of conditioning the sample line to reach equilibrium.

This step is followed by a step of controlling the temperature of the traps 102 until a release temperature is reached. It will be noted that the expression "controlling the temperature of the traps 102", when referring to the release temperature and/or trapping temperautre may include maintaining the temperature constant, increasing the temperature or decreasing the temperature of the volume contained or enclosed in the traps 102.

It should be noted that the sampling step and the step of controlling the temperature of the traps 102 could either be successive or concurrent. It will be noted that the term "concurrent", synonyms or variants thereof refer to two steps that occur during coincident or overlapping time periods. The term "concurrent" does not necessarily imply complete synchronicity, and encompasses various scenarios including time-coincident or simultaneous occurrence of two steps; occurrence of a first step that both begins and ends during the duration of a second step; and occurrence of a first step that begins during the duration of a second step but ends after the completion of the second step. It will be noted that the temperature of the traps 102 may be raised using the temperature-controlled enclosure 104 having been previously described.

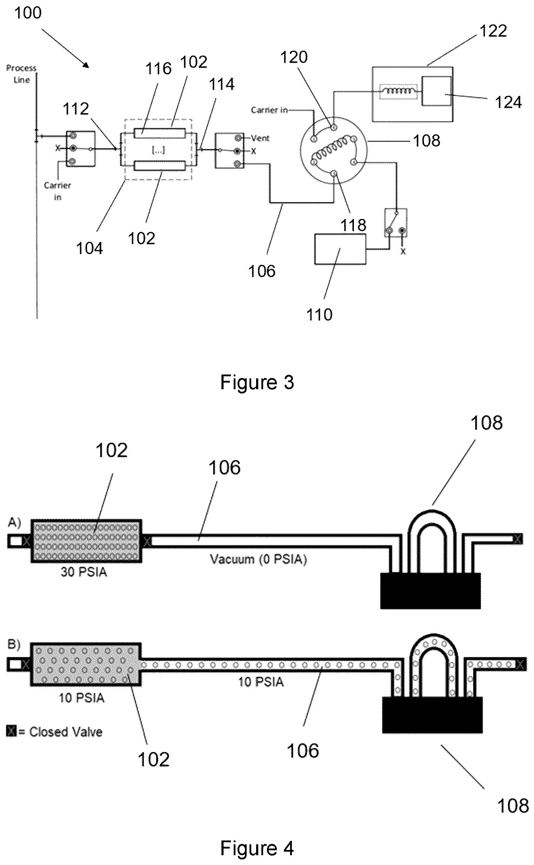

During the step of controlling the temperature of the traps 102, the sample line 106, which connects the traps 102 to the sample loop 108 is put under vacuum or sub-atmospheric pressure using the pump 110. As a result, the chromatographic line connecting the system 100 to the GC method 122 will therefore be under a sub-atmospheric pressure. Once a vacuum is created in the chromatographic line, the vacuum pump 110 can remain inline or be isolated. It is to be noted that maintaining the vacuum or sub-atmospheric pressure in the chromatographic line may help sample desorption from the traps 102 and avoid adsorption of reactive analytes or reaction with tubing of the chromatographic line. Figure 3 illustrates a schematic representation of the system 100 with isolated traps 102 and vacuum pump 110 inline with the first chromatographic line.

When the equilibrium and optimal desorption temperature have been reached in the sample line 106, the method includes a step of injecting the concentrated gas sample in the sample loop 108. The step of releasing the concentrated gas sample includes circulating the concentrated gas sample in the sample line 106, towards the sample loop 108.

In some embodiments, the method may include a step of isolating the pump 110 before the release of the concentrated gas sample. When the pump 110 is isolated, the sample line will remain at sub-atmospheric pressure. Once the concentrated gas sample is released, an equilibrium will be reached, and the analyte molecules will be dispersed along the sample line 106. The equilibrium may be reached in a few seconds or less.

Figure 4A) shows the analyte dispersion and pressure when the trap 102 is isolated, with the first chromatographic line being maintained under sub-atmospheric pressure. Figure 4B) shows the analyte dispersion after the step of releasing the concentrated gas sample, once the equilibrium has been reached.

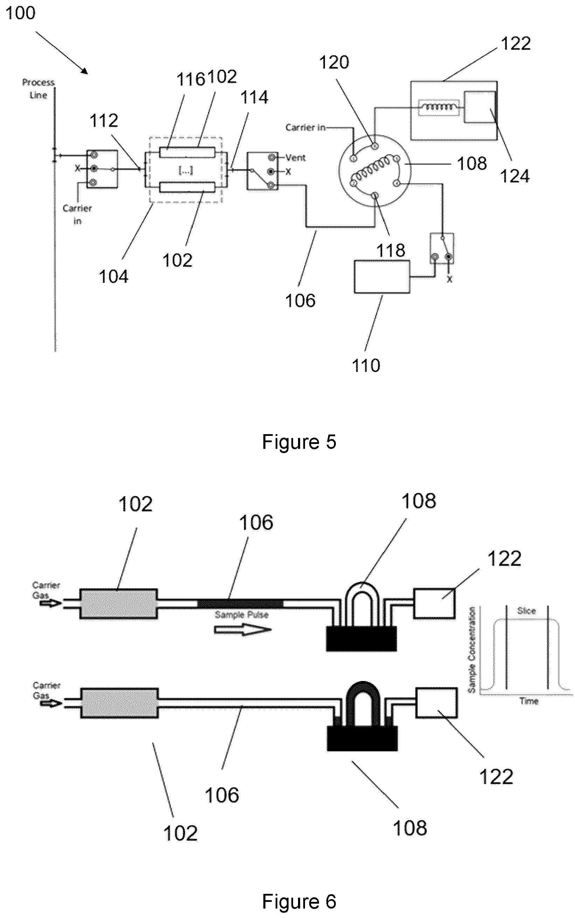

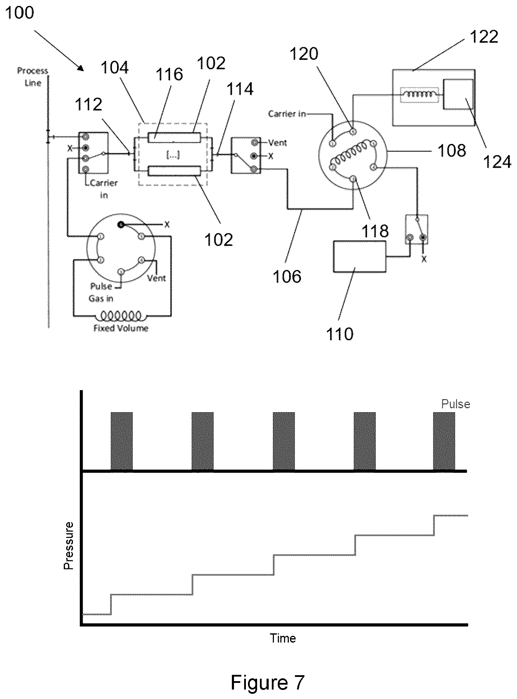

In some embodiments, when the concentrated gas sample is released, the gas outlet 114 of the trap 102 is inline with the first chromatographic line (i.e., the sample line 102) and the gas inlet 112 of the trap 102 remains isolated, as illustrated in Figure 5, which depicts a schematic representation of the system 100 with the vacuum pump 110 being isolated and the traps 102 being in their release position. In other embodiments, a fixed volume of a gas can be injected in the traps 102 to improve or facilitate the desorption of the analytes, as illustrated in Figure 7.

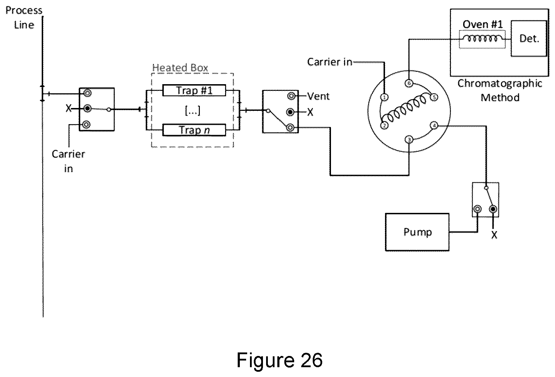

The method also includes operating the sample loop 108 to release the concentrated gas sample contained in the sample loop 108 in a chromatographic method 122, *i.e*., injecting the concentrated gas sample in the chromatographic method 122, which may include, as indicated above, any chromatographic components, such as the detector 124, or any combinations of chromatographic components. If the pump 110 is isolated after the injection of the concentrated gas sample, the content of the sample loop 108 of the injection valve can be injected in the chromatographic method 122, once equilibrium have been reached in the sample line and the chromatographic line. A nonlimitative example of this step is illustrated in Figure 26.

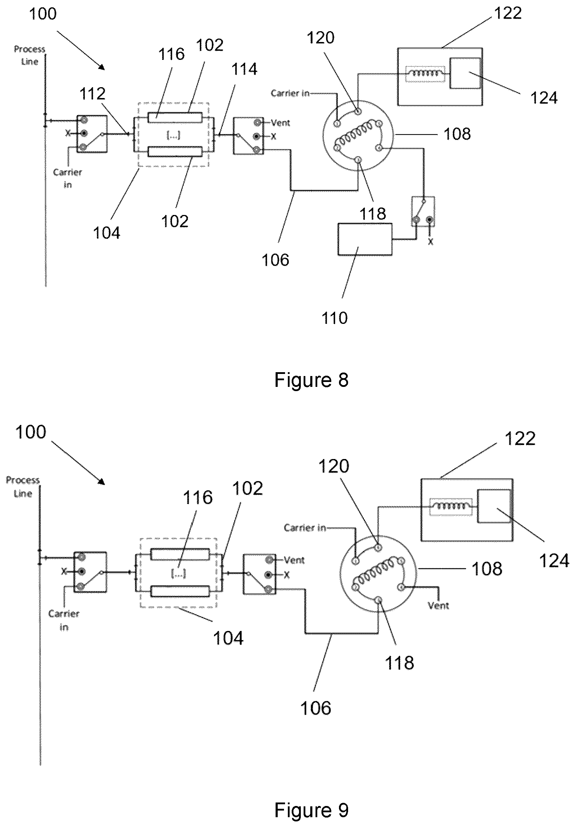

In some embodiments, the concentrated gas sample may be released as a "pulse". In these embodiments, the vacuum pump 110 may be inline with the first chromatographic line, *i.e*., the sample line 106. It should however be noted that the pump 110 is optional in embodiments wherein the concentrated gas sample is released as a pulse. Indeed, the sample loop 108 could be at atmospheric pressure, and the pulse may be released with the flow of the sample. The pump 110 is generally used in embodiments wherein the content of the trap 102 is released and then the equilibrium is reached in the volume of the sample line 106 and the sample loop 108. When the concentrated gas sample is released, a continuous flow of carrier gas can be used to help desorption of the analytes from the trap 102, as illustrated in Figure 8. It will be noted that the pulse may be produced even without the use of a vacuum pump, as illustrated in Figure 9.

The pulse is generally injected in the chromatographic method 122 when it reaches the sample loop 108 of the injection valve. In some embodiments, the pulse may be completely injected in the GC method 122. In other embodiments, only a portion of the pulse may be injected in the GC method 122, for example the most concentrated "slice" of the pulse, as schematically illustrated in Figure 6, which illustrates a sample being released as a pulse and pushed with a carrier gas. In this configuration, the pump 110 is inline.

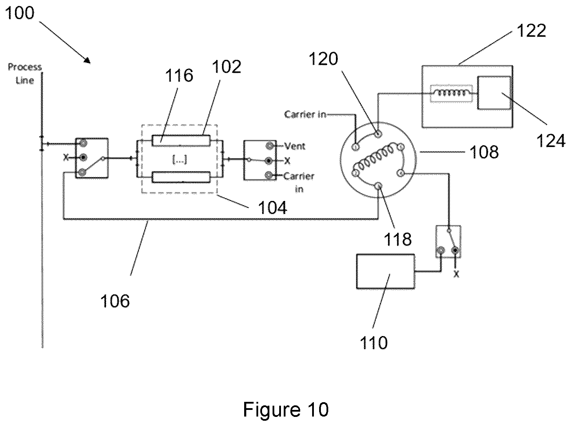

In some embodiments, the gas sample is released in the same direction as it is sampled, which be useful in numerous applications. However, this configuration may be problematic when the traps 102 contain different materials, if the traps 102 are connected in series, or if the trapping material has a strong affinity for the analytes even at the release temperature. Therefore, the system 100 may be operated to release the gas sample in the same direction as it is sampled (*e.g*., the configuration illustrated in Figure 1) but may also be operated such that the gas sample can be released in the opposite direction of the sampling (*e.g*., the configuration illustrated in Figure 10).

Now turning to Figures 7 to 10, different embodiments and variants of the technology will now be described.

Figure 7 (top portion) shows a schematic representation of an embodiment in which a pulse gas (*e.g*., a pure gas, which may be the matrix gas) may be injected in the GC method. Figure 7 (bottom portion) is a representation of the pressure increase associated with the injection of the pulse of gas. In the configuration of Figure 7, a fixed volume of gas can be injected to promote or enhance the desorption of the analytes. When the pulse concentrated gas is released or injected, the pulse flows through the trap 102 so that the pressure in the whole accessible volume is at equilibrium, while carrying additional analyte molecules with it. Multiple pulses can be injected or released in the system 100 before the sample is injected in the chromatographic method 122. Of note, the injection of pulses of pure gas may assist in cleaning the contaminants and/or increasing the pressure in the sample loop 108.

Figure 8 is a schematic representation of an embodiment in which the analytes are released from the traps 102 as a pulse with the vacuum pump still inline. In this configuration, the gas sample is released in the same direction as the direction of the sampling.

Figure 9 shows an embodiment wherein the analytes are released from the traps 102 as a pulse without a vacuum pump.

Figure 10 is a schematic representation of an embodiment wherein the concentrated gas sample is released in a direction opposite the direction of the sampling. It will be noted that the concentrated gas sample may be released in the reverse direction in any configurations of the system 100 herein disclosed.

### Examples of implementations and related results

Now that different embodiments of a method and related system for concentrating a gas sample have been described, examples of implementations and results that may be obtained with the technology disclosed herein will be presented.

The following section will present results acquired for samples containing CO₂, N₂, CH₄ and H₂S. It will be noted that the method may apply to any analytes and any types of gas matrices, such as, for example and without being limitative, permanent gases (H₂, O₂, N₂, CH₄, CO, CO₂), non-methane hydrocarbons (NMHC), volatile organic compounds (VOCs), sulfur-based compounds (H₂S, SO₂, mercaptans, sulfides, disulfides, and the like), noble gases (He, Ne, Ar, Kr, Xe, Rn), silanes, hydrides (AsH₃, PH₃, SbH₃, BH₃, and the like), halogenated compounds (including CFCs) or any volatile, semi-volatile or gaseous molecules.

### Sample Preconcentration and Quantification

In order to illustrate the efficiency of the method having been described, a sample containing traces of CO₂ in argon was measured with the system herein disclosed. The configuration used for this example is the one presented in Figures 1 to 5. A material with a good affinity for CO₂ at room temperature was selected as the trapping material. Chromatograms acquired for CO₂ having been concentrated with the present method were compared with chromatograms acquired for CO₂ directly injected in the chromatographic method without preconcentration, as it is generally performed in the art.

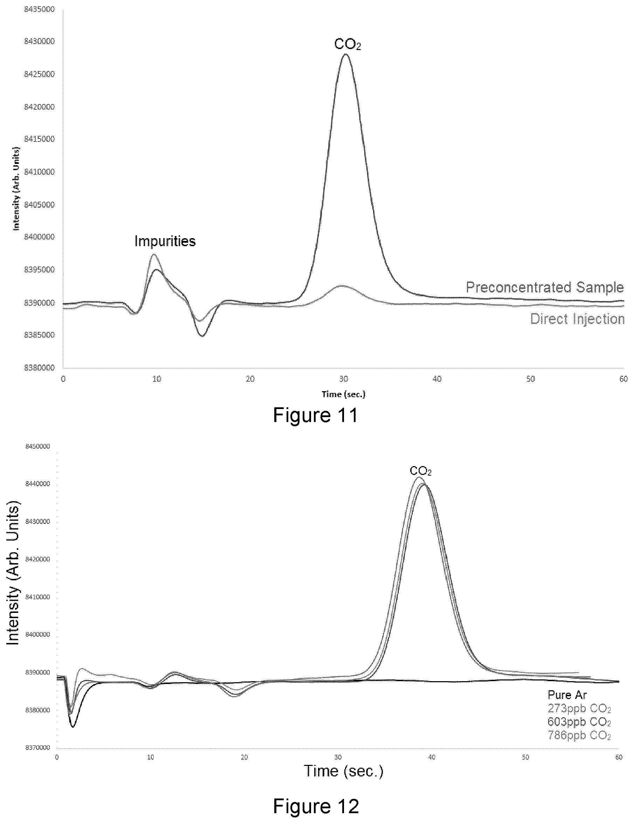

Figure 11 shows a chromatogram acquired for 823 ppb CO₂ in a matrix gas of argon, injected directly in the chromatographic method, as it would be done using the techniques from prior art (blue line). Figure 11 also shows a chromatogram of a concentrated sample obtained using the method and system herein described (red line). It should be noted that the carrier gas is also argon, *i.e*., the matrix gas and the carrier gas include the same elements. In this scenario, the optional flushing step was not done.

As it will be appreciated, the chromatogram obtained with the concentrated gas sample (CO₂ in this example) has a peak that is approximately 11 times more intense than the peak present in the chromatogram obtained using the techniques from prior art. This result supports that the limit of detection may be improved when the gas sample is concentrated using the technology of the current disclosure. Of note, the concentration factor of the analytes depends on many parameters, such as, for example sampling time, sample flow during sampling, trap temperature during sampling, release temperature, trapping material, length of the sample line, size of the trap, and/or any other relevant paraments. It is to be noted that each of these parameters may be optimised for each analyte being characterized. This may enhance or maximize the concentration factor.

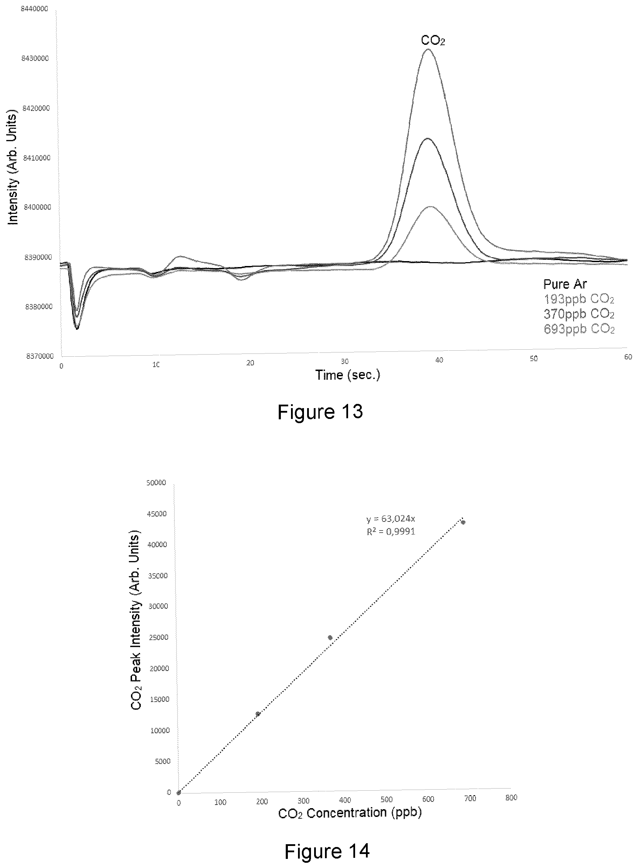

The potential saturation and/or breakthrough of the traps should also be considered. The measured signal should be proportional to the analyte concentration during the quantification of the analytes. If the traps are saturated, the signal will not be proportional the concentration of the analyte, thereby rendering the quantification difficult or impossible. An example of results obtained with saturated traps is presented in Figure 12. In this example, the traps were saturated with CO₂, which may be caused, for example, by a too long sampling time. As illustrated in Figure 12, the signals measured for 273 ppb, 603 ppb and 786 ppb of CO₂ in argon are almost identical and does not allow adequate quantification of CO₂. Other than the sampling time, the sample flow through the column during the sampling step, the size of the trap and dilution of the analytes are parameters that can be changed or optimized to avoid, or at least limit, trap saturation. Now turning to Figure 13, results that may be obtained with unsaturated traps are illustrated. The samples containing 193 ppb, 370 ppb and 693 ppb of CO₂ in argon could easily be distinguished, and the intensity of the peak present in the chromatogram is now proportional to the CO₂ concentration. It should be noted that the results presented in Figure 13 were obtained with a smaller sampling time than the sampling time used to obtain the results of Figure 12.

With reference to Figure 14, the peak intensity or the peak area can be plotted as a function of the CO₂ concentration, which allows quantifying sample containing unknown concentrations of the analyte being characterized, if the chromatogram is acquired in the same conditions as a reference sample. Of note, the relation between the peak intensity or peak area and the concentration is different for every analyte. In Figure 14, the relation between the concentration and the peak intensity is linear, but any other types of relation are also possible. The results notably depend on the concentration parameters, such as the trapping materials, the trap size, the sampling time, the matrix flushing time, the release temperature and the like. Small variations of these parameters can have a significant impact on the result and cause quantification errors, which justifies the importance of using the method and system for concentrating a sample as disclosed herein. Other parameters could also impact the results. Nonlimitative examples of such parameters are the chromatographic method, the type of detector and acquisition parameters. Therefore, prior to quantification, the signal for each analyte needs to be calibrated with one or multiple reference samples using the same parameters that will be used for measuring the samples.

### Matrix flushing

The configuration illustrated in Figure 1 allows the matrix to be flushed without entering the chromatographic line(s) (or sample line 106) or the chromatographic method 122. The selected trapping material preferably has a good affinity with the analytes, but a low affinity with the matrix. Depending on the specific affinity of the materials being used in the system 100 and the species under study, the analytes can be adsorbed, or just delayed by the trapping material. This is an improvement over the prior art techniques, as it allows a much simpler method for chromatographically characterizing a sample.

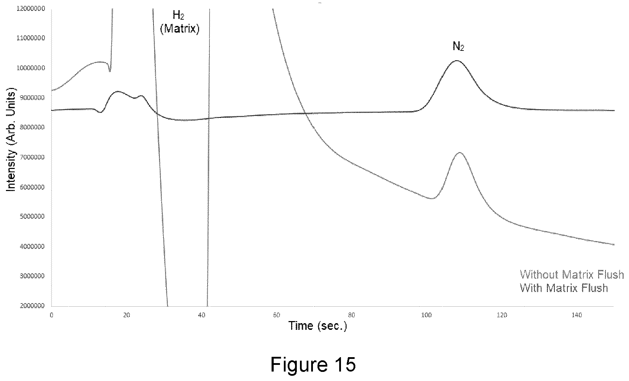

The benefits of the flushing step are well illustrated in Figure 15. In this example, a sample containing 523 ppb of N₂ in hydrogen was concentrated with the method herein described and injected in a chromatographic method. The chromatographic method used for this example is relatively simple and straightforward, and includes one injection valve, one chromatographic column and one detector. The analysis was done with and without the optional matrix flushing step after sampling. All the other concentration and acquisition parameters are identical. As seen in Figure 15, the signal from the matrix gas (H₂) is much more intense without the flushing step. In addition, an important baseline drift may be observed in the chromatogram after the injection, which is caused by the large amount of hydrogen injected in the system, thereby affecting the measurement of N₂. Such a baseline drift has an important impact on the limit of detection, and also the accuracy of the measurement, which may limit the analysis of sample containing low N₂ concentration. In a chromatographic system of prior art, additional valves and columns would have been added and complex chromatographic methods such as heart-cut or backflush would be required to limit the amount of matrix reaching the detector. This would be especially important when a highly reactive matrix gas is analyzed or if the detector can be damaged by the matrix gas. As such, techniques from prior art are much more expensive system, not only because of the additional components, but also because of the relatively long tuning time required for such complex systems. Existing techniques are also associated with relatively long and difficult maintenance. By contrast, the method and system herein disclosed allow obtaining much better results, with a simpler chromatographic system, only by using the flushing step when operating the concentration system.

The flushing step may be advantageous when characterizing gas samples including hazardous analytes or gas matrix. For example, it may help in reducing the amount of a hazardous matrix gas in the sample line and analytical instruments. Conventional instruments used for the analysis of highly toxic, reactive or flammable gases are generally be placed in an expensive ATEX Cabinet to limit the fire hazards or health risks for the users. If the concentration system herein described is placed close to the process line and the flushing step is performed, it results in a much safer analytical method. In this context, the ATEX cabinet would not berequired.

### Inline trap or injection from a sample loop

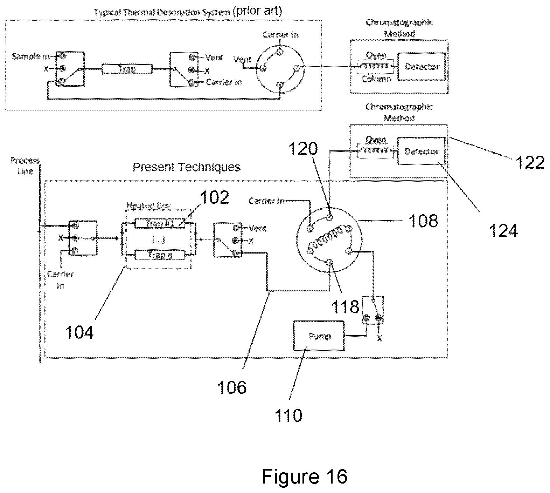

In the methods having been described herein, the traps are not inline or are not directly connected with the chromatographic method, contrary to the existing techniques. Indeed, in a typical thermal desorption concentrator, the sample is released directly in the chromatographic method, which has multiple drawbacks compared to the method presented here. Schematics comparing a typical inline thermal desorption system and the present techniques are presented in Figure 16 (top portion). Of note, the exact components may vary from one commercial system to another, but the working principle for sample release principle remain essentially the same. For example, some systems of prior art may have split vent, leak testing systems configurations, different types of valves, different flow paths and other components, but the trap is always inline and directly connected with the chromatographic method when the sample is released. In this configuration, the carrier gas first flows through the trap before going through the chromatographic method. Therefore, any issues or problems with the traps or the system will impact the analysis of the sample and could potentially damage the detector. The chromatographic method represented in this figure is rather simple, with one column and one detector, but more complex systems, with more columns, valves and detectors could be also used.

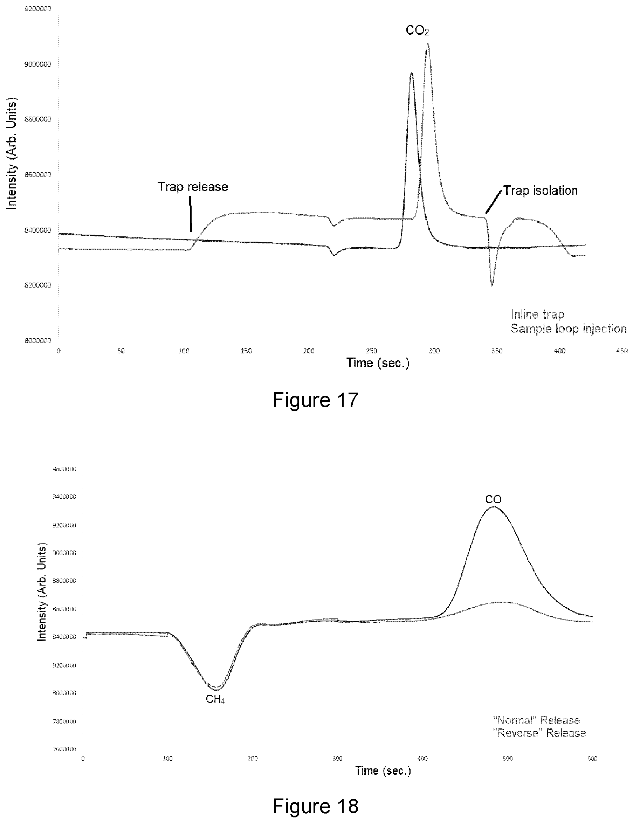

The results presented in Figure 17 show some of the advantages of injecting the concentrated sample from a sample loop instead of having the trap inline with the chromatographic method. Note that the results presented in Figure 17 were acquired with only one relatively small trap. Using multiple larger and more restrictive traps in the system of prior art would negatively impact the characterization of the analytes. In this example, a sample containing 66 ppb of CO₂ in argon was concentrated and analysed with a simple chromatographic method. The sample was first analysed with the trap inline with the chromatographic method, in accordance with the techniques from prior art. The results were compared with the same sample, but this time the sample has been concentrated with the present method and systems, with the same preconcentration and analysis conditions.

In the inline system (corresponding to the configuration of prior art), releasing the trap has an impact on the baseline of the chromatogram. The baseline is affected by flow variations and due to some properties of the trapping material. It should be noted that traps with larger volume and traps containing more compact trapping materials can be even more restrictive, which would have an even more important impact on the chromatography. In the present method and system, the trap is not inline, and so the flow of the chromatographic method is not affected by the traps. This allows the use of multiple traps, with different size and lengths, with all kind of materials granulometry that would otherwise be too restrictive inline with a chromatographic method.

A similar phenomenon can be seen when the trap is isolated in solutions from prior art. In this case, a peak caused by the quick pressure drop that occurred after the valve was actuated may be observed. This would be even more problematic in a chromatogram acquired for multiple analytes, as it may create interference if the valve is actuated at the same time as an analyte peak. Therefore, to avoid any interference from the actuation peak and baseline variation, it the release should be well timed, which can be difficult in more complex chromatograms. Therefore, it can be difficult, using the techniques from prior art, to start a new preconcentration cycle in the middle of a chromatogram acquisition, which leads to longer analysis times. In the method herein described, since the preconcentration system is not inline with the chromatography, valve actuation has no influence on the chromatography and the valve can be actuated during a chromatogram acquisition without any consequences. A new concentration cycle can thus be started in the middle of a chromatogram acquisition. This is especially interesting for chromatographic methods where the impurities take long time to elute.

As illustrated in Figure 17, the trap has a relatively small, yet non-negligeable impact on the elution time of the analytes. This could have serious consequences when multiple trapping materials are released inline. Indeed, the affinity of the analytes is different for each trapping material. Therefore, this could result in a deformed peak or result in multiple peaks with different intensities on a chromatogram for the same analyte. This could be a source of interference, as some of these peaks could co-elute at the same time as the peak of other analytes. Furthermore, if the trapping material has a strong affinity for the analyte even at the release temperature, this could result in a broader and less intense peak, affecting the limit of detection of the method. In the method presented here, since the analytes are dispersed in the sample line and injection is done after equilibrium has been reached, this has no influence on the chromatography.

Conventional inline thermal desorption systems have even more well-known and documented limitations. Since the trap is inline with the chromatographic method, the analytical method is highly susceptible to bleeding from the trap. For example, after a few injections, the traps can accumulate water moisture and it can be progressively released in the chromatographic method, leading to signal drifting and decreased limits of detection. Such configuration is also highly susceptible to small leaks that could occur on the trap or other components of the preconcentration system. This could also cause signal drifting and decreased sensitivity. Furthermore, inline preconcentration systems can be the cause of increased baseline noise on the chromatogram, as the vibrations and trapping material have an additional impact on the carrier gas flow variations through the analytical system.

Of note, large sample volumes cannot be injected in capillary chromatographic columns, due to a limited sample loading capacity of the capillary chromatographic columns. Since the whole volume of the trap is injected in the chromatographic method with the thermal desorption system of prior art, the maximum size of the trap is limited with such system. It would be difficult or even impossible, in some circumstances, to use multiple traps at the same time. In the proposed method having been insofar described, since the content of the traps is released in the sample line, a small sample loop can be used for injection in the chromatographic method. This allows the use of multiple large traps for sample preconcentration in combination with a chromatographic method that uses capillary columns.

### Trap and Sample Release Orientation

As presented in Figure 10, an alternative configuration where the concentrated sample is released to the sample line from the trap inlet can be used. This approach or configuration may be useful when the trapping material has a strong affinity with some of the analytes. If multiple traps are connected in series, or if a trap contains multiple trapping materials, the orientations of the trap(s) and the release may be particularly important, which is better illustrated in Figure 18. A sample containing 417 ppb of CH₄ and CO in nitrogen was preconcentrated on a trap containing two different trapping materials and both release orientations were tested. As it can be seen in Figure 18, the reverse configuration provides much better results in this scenario. The effects associated with using a normal or direct release versus using a reverse release may depend on the gas sample being analyzed or at least some properties thereof.

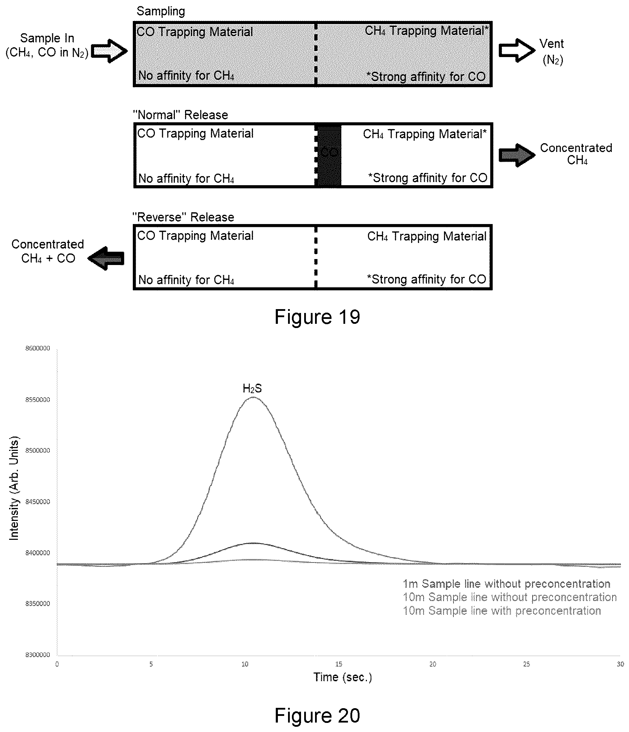

The traps configuration used for the example illustrated in Figure 18 is presented in Figure 19. As shown in Figure 19, the trap orientation and release direction have an impact on the chromatography results. In this example, the first material is used for trapping CO and has no affinity for CH₄. The second material is used for trapping CH₄. This material also has a strong affinity for CO. When the trap orientation is adequate during sampling, such an affinity is not a problem, since all the CO molecules from the sample are trapped by the first material.

If the sample is released with the normal (direct) configuration, such as the one presented in Figure 5, the concentrated CH₄ would be easily desorbed and CO passes through the second trapping material having a strong affinity for this molecule, even at high temperature. Therefore, with this configuration, only the preconcentrated CH₄ will be observed. The released amount of CO is minimal. However, if the sample is released with the reverse configuration, as presented in Figure 10, concentrated CH₄ and concentrated CO can be measured. Despite being specific, this example illustrates the impact of the trapping material combination and the orientation of the gas flow. These parameters should be carefully taken into consideration regardless of the type of matrix gas and analytes. This also further illustrates how challenging it would be to use multiple traps or trapping materials in inline setups, compared to the method presented here, as the different materials used will have a more direct impact on the chromatography.

### Impact of the sample line and internal volume

Highly reactive molecules such as sulfur-based compounds and volatile organic compounds (VOCs) have a strong tendency to be adsorbed or react with the metal tubing used in sampling and analytical systems. These tubes can be chemical treated to be inert (*e.g*., silconert or sulfinert), which may allow reducing the sample losses. Of course, this approach has its flaws. It has been observed for many molecules that the further away the analytical system is from the process line, the lower is the measured signal. This is generally problematic in existing techniques, considering that these molecules are often present in the ultra-trace level (low ppb to sub-ppb) and could be almost completely removed from the sample before reaching the analytical system, thereby leading to inaccurate analyte quantification and unreliable results.

In the proposed method, the sample is concentrated close to the process line and away from the GG system, before the sample line (*i.e*., the line between the process line and the chromatographic/analytical system). Therefore, when the sample is released after concentration, the amount of each analyte in the sample line is much higher, which increases the number of molecules reaching the analytical system. Furthermore, considering that the sample line is under sub-atmospheric pressures when using the method of the current disclosure, the number of molecules adsorbed on the sample line may be reduced, thus further improving the sensitivity and accuracy of the method. One of the advantages of the present method is illustrated in Figure 20. Chromatograms are compared for a sample containing 102 ppb of H2S in argon without concentration, with a sample line of 1 m (red line) and 10 m (blue line) between the process line and the analytical system. A chromatogram acquired with the concentration method as disclosed herein (green line), with a 10 m sample line is also presented. As it can be seen, the distance between the process line and the analytical system has a negative impact on the chromatogram acquired without concentration. However, the method and system disclosed herein can mitigate this negative impact.

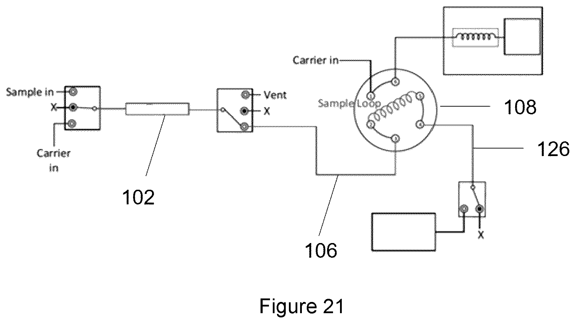

It should be noted that even if the negative impact of the distance between the process line and the analytical system may be mitigated with the present technology, the length of the sample line will have an impact on the concentration factor, different than impurity losses. Indeed, when the sample is released from the trap, it is dispersed in the whole accessible volume under vacuum. This volume includes the traps, the sample line, the sample loop and the tube between the injection valve and the valve that controls the pump isolation. The major components affecting the internal volume are shown in red in Figure 21, *i.e*., the trap 102, the sample line 106, the sample loop 108 and the valve 126 (or other chromatographic components) connecting the sample loop 108 to the pump 110. The flow path inside in the valves is relatively negligible. Most of these components will be fixed for a specific application or in a specific device. However, for the same application or the same preconcentration device, the length of the sample line is the parameter most susceptible to change from one user to another.

The impact of the sample line length can be extrapolated using equation 1: ${C}_{1} \times {V}_{1} = {C}_{2} \times {V}_{2}$ (1)

C₁ is the concentration of the concentrated sample dispersed in an initial accessible volume (V₁). V₁ is the combination of the internal volume of the trap(s), the sample line, the sample loop and the line between the injection valve and the valve that isolates the pump. C₂ is the concentration for a sample concentrated in the same conditions as for C₁ but dispersed in a different internal volume (V₂). To illustrate the effect of the sample line length, the size of the trap, sample loop and line between the injection valve and pump valve will be fixed in the following example.

In this example, the effect of the sample line length on the concentration of a 500 ppb mol/mol of H₂S in argon (2.23x10⁻⁸mol/L) will be illustrated. In this example, a concentration of 2.23x10-7 mol/L of H₂S will be used. The concentration of this sample may be achieved with a system having a 30 cm sample line (0.040" or 0.0508 cm internal diameter). A concentration factor of 10 times with such setup may be achieved. An accessible volume of 4.74 cm³ would be representative of a typical preconcentration system used for this application, not including the sample line. 0.24 cm³ is added for the sample line. Therefore, V1 is 4.98cm³ for this setup. If a 10 m sample line, with an internal diameter of 0.040" or 0.0508 cm is used instead, the new internal volume (V₂) is 12.84 cm³. Using Equation 1 we can calculate: $2.23 \times {10}^{- 7} mol / L \times 4.98 {cm}^{3} = {C}_{2} \times 12.84 {cm}^{3}$ ${C}_{2} = 8.65 \times {10}^{- 8} mol / L .$

Therefore, compared to the unconcentrated sample, a concentration factor of about 10 may be achieved with a 30 cm sample line. A concentration factor of about 3.9 may be obtained with a 10 m sample line with an internal diameter of 0.040". In order to improve the concentration factor, tubing with smaller internal diameter can be used. For example, 1/16" chromatographic-grade sulfinert-coated stainless-steel tubes with an internal diameter of 0.020" (0.0254 cm) are readily available and can be used as the sample line. For 10 m of this tubing, the new internal diameter (V) would be 6.77 cm³ and therefore: $2.23 \times {10}^{- 7} mol / L \times 4.98 {cm}^{3} = C 2 \times 6.77 {cm}^{3}$ ${C}_{2} = 1.64 \times {10}^{- 7} mol / L .$

A concentration factor of about 7.4 may then be achieved, in comparison with a sample without concentration.

The abovementioned example serves an illustrative purpose only. One skilled in the art that the concentration factor may vary depending on the analyte and the concentration conditions. The concentration factor depends on the sampling conditions such as the sampling time, sampling flow rate, the affinity of the analyte with the trapping material, the size of the trap, and the like.

Furthermore, despite focusing on the length of the sample line for this example, the internal volume of the other components contributing to the accessible volume will also have a direct impact on the concentration factor and should be considered when designing the concentration system for a specific application.

It may be advantageous to use a sample loop having a relatively large volume, as it would increase the concentration of analytes injected in the chromatographic method and/or the detector. However, it also increases the accessible volume and would therefore dilute the concentrated sample. Note that the sample loop is usually selected according to the chromatographic method (or other detection method) used. For example, only small volumes can be injected in capillary columns, while larger volumes can be injected in micro-packed and packed columns. The sample loop should also be selected to avoid detector saturation.

The number of traps and trap size are selected based on the analytes to be concentrated in one application or for one concentration system. If the traps are larger, it will increase the trap capacity for sample preconcentration, but it will also increase the accessible volume. Therefore, the traps should be selected to maximize the sample preconcentration, but also to avoid unnecessary excess volume. If the system contains traps that are used for preconcentration of molecules that are not in the sample, such traps should be removed or isolated to avoid contributing to the accessible volume without helping sample concentration. Furthermore, when a trap is far from being saturated, the use of a smaller trap should be considered to decrease the accessible volume and maximize the trapping efficiency.

The line between the injection valve and the valve that controls the pump should always be as short as possible, as it can be considered as a dead volume that could potentially be detrimental to the concentration factor.

### Conversion catalysts

Instead of trapping materials, the traps could alternatively be filled with catalyst material(s). Such catalyst could be used to convert any molecules into another that is easier to trap or to analyse with the analytical system. Any types of catalyst materials that facilitate any type of chemical reaction on any type of analyte, matrix gas or interfering molecule can be considered. It can be used to help trapping or elimination of specific molecules, facilitate chromatography, detection or any other type of analytical method.

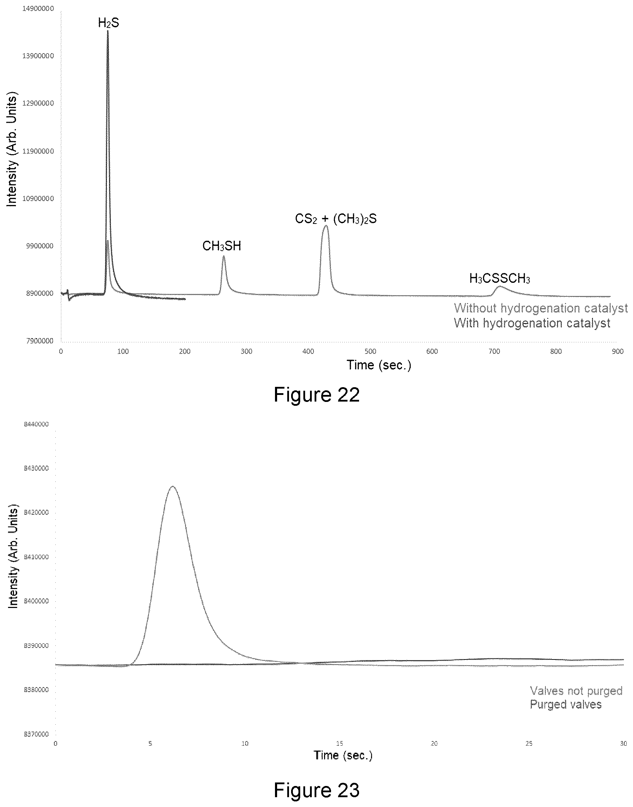

For example, sulfur-based compounds (*e.g*., thiols, mercaptans and sulfides) can all be converted in H₂S using a hydrogenation catalyst in presence of hydrogen at high temperature, which would facilitate the quantification of total sulfur in a sample, as presented in Figure 22. In this example, converting all the sulfur-based compounds in H₂S makes the analysis time much shorter, as H₂S elutes faster than heavier molecules like dimethyldisulfide (H₃CSSCH₃). Furthermore, since all the sulfur-based compounds are converted into H₂S with this catalyst, it allows the measurement of more exotic sulfur species that would otherwise not be analysed by a traditional chromatographic method. Sulfur-based compounds could also be converted in SO₂ with an oxidation catalyst, which can be a better option for sulfur analysis, depending on the matrix and the analytical system used for quantification.

Another example would be the methanization of CO and CO₂. Indeed, some detectors such as flame ionization detectors (FID) cannot detect CO, CO₂ or any oxidized species and so these species should first be converted into methane with a catalyst material. The system herein disclosed allows conversion of oxidized species into methane with the right catalyst and would allow measurement of CO and CO₂ with an FID. The opposite reaction is also possible, where all the organic species are converted in CO₂ with an oxidation catalyst to facilitate the analysis by measuring only this compound. In the example presented in Figure 22, the sulfur-based compounds reacted with the hydrogenation catalyst at high temperature and continuously released in the sample line.

In an alternative method, the sample could also be trapped and allowed to react while the trap is isolated. The converted sample could then be released as described here for the trapped samples or any alternative configurations having been described.

The catalyst material could also be placed inline with a trapping material, before or after, in the same trap or in a separate trap. A catalyst material put inline before a trapping material could, for example, be used to convert any molecule into another to facilitate trapping (if it is an analyte) or make it more difficult to trap (if we want to eliminate it).

### Valve Purge and Configuration

Any types of valve could be used to realize the method and system having been described. However, in order to avoid sample contamination from leaks and improve the durability of the system, the valves should be selected carefully to reach the highest standards of quality. This is especially important considering that the proposed system will often be used for the analysis of ultra-trace level impurities. Since the system will be under vacuum, the presence of small leaks may lead to air entering the system, thus contaminating the sample, making the analysis unreliable. Furthermore, the vacuum can have an important impact such as increasing the force required for actuation in rotary valves or deforming the diaphragm in diaphragm valves, thus reducing the valves' lifetime.

The results having been presented have been obtained with Purged Lip Sealing Valves (PLSV) from ASDevices. This technology has many advantages over other valve technologies. This is the a durable type of analytical valves, as it can be used for over 1 000 000 actuations in ultra-high purity applications. Thanks to its reduced surface sealing area, the force required for sealing is equal to 14 % of a typical conical valve. This allows the valve head to be coated with inert treatments such as Sulfinert, which is especially important for the analysis of ultra-trace level reactive compounds such as sulfur-based compounds. Indeed, in typical conical rotary valves, due to the force required for sealing, valve actuation can cause pealing of the surface treatment. The low sealing surface and force required for sealing the PLSV are especially interesting for this method considering the valves are actuated many times while under vacuum, which increases the force required for actuation and thus increase valve wearing. The impact of the vacuum would be much more important on typical rotary or diaphragm valves.

The PLSV also uses a unique purge concept that protects if from inboard/outboard and cross-port leaks. This is especially important considering that many ports and components connected to the valve will be under vacuum in this method. This makes the valve more susceptible to outboard and cross-port leaks and thus sample contamination. Figure 23 presents the results acquired for high-purity argon measured with the method described in this document, using purged PLSV compared to unpurged PLSV. Since argon was also used as the carrier gas, and due to high purity of the sample, no peaks were expected for this sample. The chromatogram acquired with the purged valves only shows a flat line, as expected. However, when the valves were not purged, a peak from air was observed.

This result indicates that due to the vacuum in the system, small leaks that would otherwise be unsignificant when operating above ambient pressure can cause sample contamination when using this method. Fortunately, valve purging prevents the leaks and preserves sample integrity. While this may not be necessary for the analysis of molecules with low concentration in air, like sulfur-based compounds and VOCs, this may be essential for the analysis of molecules that are abundant in air like nitrogen and oxygen. The presence of air in the system from the leaks may also cause problems, depending on the analytical method and detector used. Note that for this example, the purge was done using a constant argon flow from the purge inlet and connecting the purge outlet to the vacuum pump. The argon flow is used to sweep any contaminant that would enter the valve from a leak and the vacuum pump is used to decrease the pressure in the purge, to avoid any purge gas diffusion in the system due to pressure differential. Depending on the type of valve used, different purging strategies could also be used, but unpurged valves will always be more susceptible to leaks.

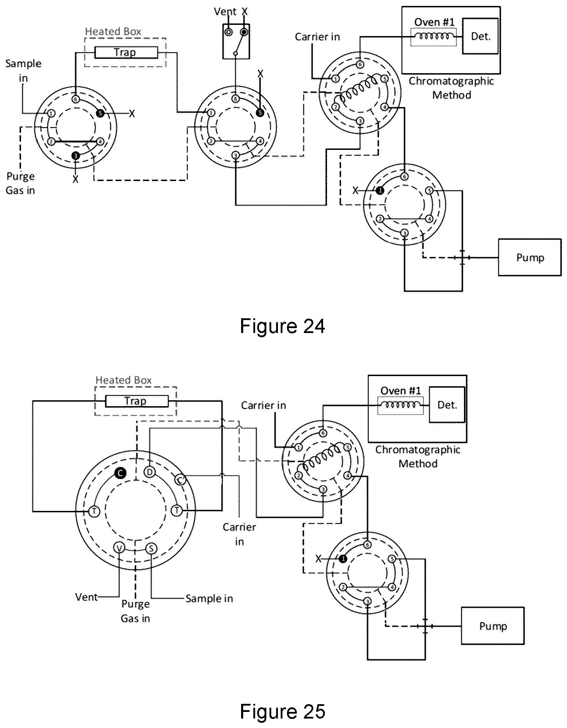

Of note, the PLSV technology is available in different configurations: 4, 6, 10 and 14 ports, Sample Stream Selection and Trap & Release (T&R). This method was tested with two different configurations, leading to the same results. The first configuration tested only used 6 ports PLSV (Figure 24) and the second configuration used a T&R PLSV (Figure 25). The T&R PLSV was designed specifically for sample concentration and its use is recommended, as it makes the system simpler. The method described here could also be done with any other valve type and valve configuration that would allow similar flow paths.

Now that different embodiments of the technology have been described and related results discussed, some advantages of the present technology will now be presented.

The presented technology allows increasing the concentration of analytes, while reducing the concentration of the matrix gas injected in the analytical system. This is especially important in order to simplify the analysis of the sample. If this sample concentration system is located at the sampling point and not the analytical system, it may prevent from having an ATEX Cabinet and may allow the use non-ATEX analytical instruments when hazardous matrix is analysed (*e.g*., hydrogen). Furthermore, by removing significant amount of a reactive matrix gas, it reduces the chances for the analytes to react with it. It also protects the analytical system from highly reactive matrix gas that could cause damage its components.

Another advantage of the present method is that it reduces losses of trace-level impurities along the sampling line, which sometimes can be meters away from the analytical instrument. Indeed, many users realised that the level of some impurities, sulfurs for example, decreases as the distance increases from the sampling point. This method can be used to limit such losses and improve the accuracy of the analytical method. It will be noted that the concentration may be achieved at the process sampling point or closer to the instrument, just before the chromatographic method. This method also allows simultaneous use of multiple traps with different size, shape and containing different materials, depending on the impurities to be measured, which is impossible with typical thermal desorption systems. This allows the preconcentration of any type of volatile compounds or gases, including light hydrocarbons and inorganic gases, which are challenging to concentrate with typical thermal desorption systems. The traps can also be filled with a catalyst instead of trapping materials for some specific applications.

The proposed method and setup have significant advantages for reliable and accurate measurement of ultra-trace level impurities. This include impurities that are not typically analysed with typical thermal desorption systems such as the light hydrocarbons and inorganic gases. Indeed, with the right combination of trapping materials and optimal parameters, excellent sample preconcentration factors can be achieved. This leads to better accuracy and limits of detection for any type of molecules. Such systems can also be easily automated, which is essential for reliable continuous process monitoring.

Because the sample is preconcentrated before the sample line and because it is under vacuum, the propose method significantly reduces sample loss from adsorption on the tubing. This method also facilitates sample line cleaning between each analysis, leading to more accurate results. This method is also much safer, since hazardous matrix can be removed from the sample close to the process line, before reaching the analytical instruments. Furthermore, by removing the matrix before the analytical system, this makes chromatography or other analytical method much easier.

Another advantage of the proposed method and system is that the sample is not released inline with the chromatographic method like in typical thermal desorption systems. Instead, the preconcentrated sample is released in the sample line and the sample loop of the injection valve at sub-atmospheric pressure. This resolves many issues often associated with thermal desorption systems such as the increased noise, bleeding from the trapping materials, flow variations, contribution of the trapping materials to the chromatography, and the like. Therefore, the valves of the preconcentration system can be actuated at the same time as a chromatogram is acquired, without affecting it and new sampling cycles can begin before the end of the chromatogram acquisition, making each analysis cycle shorter. This also allows the use of multiple traps with different sizes, since capillary columns are incompatible with large sample volume injections.

The traps can be filled with trapping materials for analytes concentration but can also be filled with catalysts. The catalysts can be used to help the conversion of any molecules into another that is easier to analyse with the analytical system. For example, the analytes can be converted in molecules that will elute faster and be easier to separate by chromatography or converted in molecules with better limits of detection for specific types of detectors. The catalysts could also convert the analytes in molecules that will be better (or less) retained by a trapping material located after the catalyst.

Some examples of the system disclosed herein include PLSVs, thanks to the many advantages of this technology compared to other types of valves. Purging the PLSVs with a flow of carrier gas and pulling the vacuum at the same time to prevents air from reaching the system, which is important to avoid sample contamination. Any other types of valve that allows the flow paths presented in this document could be used in the proposed system, but their leak integrity and robustness should be taken into consideration to avoid sample contamination and to have an acceptable lifetime, due the increased valve wearing with the vacuum.

The setup and method presented herein have significant advantages for the measurement of ultratrace impurities, compared to existing methods that use no concentration method or system, or typical thermal desorption systems. The technology presented herein is also reliable for continuous process analysis, and so is not limited to laboratory uses.

The present techniques allow a significant increase in the detection signal from the analytes and the elimination or reduction of a significant amount of the matrix gas.

The system may be easily automated and require low maintenance, leading to reliable and precise results for process monitoring. The cleaning process of the chromatographic line(s) is also relatively easy.

The system is not inline with the chromatographic method, thereby eliminating the interference from the trapping materials on the chromatography and/or avoiding flow restriction. This allows the use of larger traps and therefore, better concentration factors. This also allows the use of multiple traps at the same time, thus increasing the number of analytes that can be analysed with one system. This also facilitates sampling at the same time as the chromatogram acquisition, thus allowing faster analysis. Valve actuation on the preconcentration system will not have any impact on the chromatography.

The sample can be concentrated close to the process line and then released. This increases the concentration of the analytes in the sample line. Since the sample line is under vacuum, the reactive molecules are much less adsorbed on the tubing of the sample line. This allows significant improvement of the limits of detection.

The disclosed technology allows eliminating reactive or hazardous matrix gas from the gas sample. The gas sample reaching the analytical system is then much safer for the user and the analytical system, with comparison with existing solutions. As a result, the analytical instruments do not have to be placed in an ATEX Cabinet.

The present techniques may be used for concentrating light hydrocarbons and most inorganic gases, including permanent gases.

Several alternative embodiments and examples have been described and illustrated herein. The embodiments described above are intended to be exemplary only. A person skilled in the art would appreciate the features of the individual embodiments, and the possible combinations and variations of the components. A person skilled in the art would further appreciate that any of the embodiments could be provided in any combination with the other embodiments disclosed herein. The present examples and embodiments, therefore, are to be considered in all respects as illustrative and not restrictive. Accordingly, while specific embodiments have been illustrated and described, numerous modifications come to mind without significantly departing from the present disclosure. The scope of the invention is defined by the appended claims.

## Claims

1. A method for concentrating a gas sample, the method comprising:
preparing a concentrated gas sample from a non-concentrated gas sample with a trap (102), the trap (102) having a gas outlet (114) and enclosing an internal volume (116);
controlling a temperature of the internal volume (116) of the trap (102) to reach a release temperature;
injecting the concentrated gas sample in a sample line (106) towards a sample loop (108), the sample loop (108) having a sample loop inlet (118) and a sample loop outlet (120), the sample line (106) and sample loop (108) being at a sub-atmospheric pressure; and
operating the sample loop (108) to release the concentrated gas sample contained in the sample loop (108) in a chromatographic method (122), wherein the trap (102) is not inline with the chromatographic method (122),
**characterized in that**:
the sample line (106) is connected to the gas outlet (114) of the trap (102) and the sample loop inlet (118) of the sample loop (108); and
the sample loop outlet (120) of the sample loop (108) is connected to the chromatographic method (122).

2. The method of claim 1, wherein said preparing the concentrated gas sample from the non-concentrated gas sample comprises heating the trap (102) to reach a trapping temperature.

3. The method of claim 2, wherein said preparing the concentrated gas sample from the non-concentrated gas sample comprises circulating the non-concentrated gas sample in the trap (102) after said heating the trap (102) to reach the trapping temperature, the method further comprising flushing the trap (102) after said circulating the non-concentrated gas sample in the trap (102).

4. The method of claim 2 or 3, wherein said preparing the concentrated gas sample from the non-concentrated gas sample comprises isolating the trap (102).

5. The method of any one of claims 1 to 4, further comprising conditioning the sample line (106) to reach equilibrium conditions before said controlling the temperature of the internal volume (116) of the trap (102) to reach the release temperature.

6. The method of any one of claims 1 to 5, further comprising determining sampling parameters of the gas sample, wherein the sampling parameters comprise at least one of a sampling time, a sample flow and a pressure.

7. The method of any one of claims 1 to 6, wherein said controlling the temperature of the internal volume (116) comprises heating the internal volume (116) of the trap (102).

8. The method of any one of claims 1 to 7, wherein said injecting the concentrated gas sample comprises releasing the concentrated gas sample as a pulse.

9. The method of claim 8, wherein said operating the sample loop (108) comprises releasing only a portion of the pulse in the chromatographic method (122), the portion of the pulse corresponding to a most concentrated slice of the pulse.

10. The method of any one of claims 1 to 9, further comprising cleaning the trap (102).

11. The method of any one of claims 1 to 10, further comprising cleaning at least one of the sample line (106) and the sample loop (108), said cleaning said at least one of the sample line (106) and the sample loop (108) comprises isolating the trap (102) from said at least one of the sample line (106) and the sample loop (108), and maintaining said at least one of the sample line (106) and the sample loop (108) under vacuum conditions.

12. A system (100) for concentrating a gas sample, the system (100) comprising:
a trap (102) having an internal volume (116), a gas inlet (112) and a gas outlet (114), the trap (102) being configured to receive a non-concentrated gas sample in the internal volume (116) through the gas inlet (112), produce a concentrated gas sample and output the concentrated gas sample through the gas outlet (114);
a temperature-controlled enclosure (104) housing the trap (102) for controlling the temperature of the internal volume (116) of the trap (102);
a sample line (106);
a sample loop (108) having a sample loop inlet (118) and a sample loop outlet (120), the sample loop (108) comprising a valve, the valve being configured to be actuated to release the concentrated gas sample towards the chromatographic method (122), the sample line (106) and sample loop (108) being at a sub-atmospheric pressure, wherein the trap (102) is not inline with the chromatographic method (122); and
a pump (110) operatively connected to the sample loop (108),
**characterized in that**:
the sample line (106) is connected to the gas outlet (114) of the trap (102) and the sample loop inlet (118) of the sample loop (108); and
the sample loop outlet (120) of the sample loop (108) is connected to the chromatographic method (122).

13. The system (100) of claim 12, further comprising an additional trap (102).

14. The system (100) of claim 13, wherein at least one of the trap (102) and the additional trap (102) comprises at least one trapping material, said at least one trapping material is selected from the group consisting of: zeolites, molecular sieves, silica gels, porous glasses, porous polymers, activated charcoals, carbon blacks, alumina, porous metal oxides, metal-organic frameworks, alloys and metal powders.

15. The system (100) of claim 13 or 14, wherein at least one of the trap (102) and the additional trap (102) comprises at least one catalyst material, said at least one catalyst material is selected from the group consisting of: alumina and nickel.

## Patentansprüche

1. Verfahren zur Konzentration einer Gasprobe, wobei das Verfahren umfasst:
Herstellen einer konzentrierten Gasprobe aus einer nicht konzentrierten Gasprobe mit einer Falle (102), wobei die Falle (102) einen Gasauslass (114) aufweist und ein Innenvolumen (116) umschließt;
Regeln einer Temperatur des Innenvolumens (116) der Falle (102), um eine Freisetzungstemperatur zu erreichen;
Einspeisen der konzentrierten Gasprobe in eine Probenleitung (106) in Richtung einer Probenschleife (108), wobei die Probenschleife (108) einen Probenschleifeneinlass (118) und einen Probenschleifenauslass (120) aufweist und die Probenleitung (106) und die Probenschleife (108) unter einem unteratmosphärischen Druck stehen; und
Betreiben der Probenschleife (108), um die in der Probenschleife (108) enthaltene konzentrierte Gasprobe in ein chromatographisches Verfahren (122) freizusetzen, wobei die Falle (102) nicht in Reihe mit dem chromatographischen Verfahren (122) angeordnet ist,
**dadurch gekennzeichnet, dass**:
die Probenleitung (106) mit dem Gasauslass (114) der Falle (102) und dem Probenschleifeneinlass (118) der Probenschleife (108) verbunden ist; und
der Probenschleifenauslass (120) der Probenschleife (108) mit dem chromatographischen Verfahren (122) verbunden ist.

2. Verfahren nach Anspruch 1, wobei das Herstellen der konzentrierten Gasprobe aus der nicht konzentrierten Gasprobe ein Erwärmen der Falle (102) umfasst, um eine Einfangtemperatur zu erreichen.

3. Verfahren nach Anspruch 2, wobei das Herstellen der konzentrierten Gasprobe aus der nicht konzentrierten Gasprobe ein Zirkulierenlassen der nicht konzentrierten Gasprobe in der Falle (102) nach dem Erwärmen der Falle (102), um die Einfangtemperatur zu erreichen, umfasst, wobei das Verfahren ferner ein Spülen der Falle (102) nach dem Zirkulierenlassen der nicht konzentrierten Gasprobe in der Falle (102) umfasst.

4. Verfahren nach Anspruch 2 oder 3, wobei das Herstellen der konzentrierten Gasprobe aus der nicht konzentrierten Gasprobe ein Isolieren der Falle (102) umfasst.

5. Verfahren nach einem der Ansprüche 1 bis 4, ferner umfassend ein Konditionieren der Probenleitung (106), um Gleichgewichtsbedingungen zu erreichen, bevor die Temperatur des Innenvolumens (116) der Falle (102) geregelt wird, um die Freisetzungstemperatur zu erreichen.

6. Verfahren nach einem der Ansprüche 1 bis 5, ferner umfassend ein Bestimmen von Probenahmeparametern der Gasprobe, wobei die Probenahmeparameter mindestens eines von einer Probenahmezeit, einem Probenstrom und einem Druck umfassen.

7. Verfahren nach einem der Ansprüche 1 bis 6, wobei das Regeln der Temperatur des Innenvolumens (116) ein Erwärmen des Innenvolumens (116) der Falle (102) umfasst.

8. Verfahren nach einem der Ansprüche 1 bis 7, wobei das Einspeisen der konzentrierten Gasprobe ein Freisetzen der konzentrierten Gasprobe als Impuls umfasst.

9. Verfahren nach Anspruch 8, wobei das Betreiben der Probenschleife (108) ein Freisetzen lediglich eines Teils des Impulses in das chromatographische Verfahren (122) umfasst, wobei der Teil des Impulses einem am stärksten konzentrierten Abschnitt des Impulses entspricht.

10. Verfahren nach einem der Ansprüche 1 bis 9, ferner umfassend ein Reinigen der Falle (102).

11. Verfahren nach einem der Ansprüche 1 bis 10, ferner umfassend ein Reinigen mindestens eines von der Probenleitung (106) und der Probenschleife (108), wobei das Reinigen des mindestens einen von der Probenleitung (106) und der Probenschleife (108) ein Isolieren der Falle (102) von dem mindestens einen von der Probenleitung (106) und der Probenschleife (108) und ein Aufrechterhalten des mindestens einen von der Probenleitung (106) und der Probenschleife (108) unter Vakuumbedingungen umfasst.

12. System (100) zum Konzentrieren einer Gasprobe, wobei das System (100) umfasst:
eine Falle (102), die ein Innenvolumen (116), einen Gaseinlass (112) und einen Gasauslass (114) aufweist, wobei die Falle (102) dazu konfiguriert ist, eine nicht konzentrierte Gasprobe durch den Gaseinlass (112) in dem Innenvolumen (116) aufzunehmen, eine konzentrierte Gasprobe zu erzeugen und die konzentrierte Gasprobe durch den Gasauslass (114) auszugeben;
ein temperaturgeregeltes Gehäuse (104), das die Falle (102) aufnimmt, um die Temperatur des Innenvolumens (116) der Falle (102) zu regeln;
eine Probenleitung (106);
eine Probenschleife (108), die einen Probenschleifeneinlass (118) und einen Probenschleifenauslass (120) aufweist, wobei die Probenschleife (108) ein Ventil umfasst, wobei das Ventil dazu konfiguriert ist, betätigt zu werden, um die konzentrierte Gasprobe in Richtung des chromatographischen Verfahrens (122) freizusetzen, wobei die Probenleitung (106) und die Probenschleife (108) unter einem unteratmosphärischen Druck stehen und wobei die Falle (102) nicht in Reihe mit dem chromatographischen Verfahren (122) angeordnet ist; und
eine Pumpe (110), die mit der Probenschleife (108) wirkverbunden ist,
**dadurch gekennzeichnet, dass**:
die Probenleitung (106) mit dem Gasauslass (114) der Falle (102) und dem Probenschleifeneinlass (118) der Probenschleife (108) verbunden ist; und
der Probenschleifenauslass (120) der Probenschleife (108) mit dem chromatographischen Verfahren (122) verbunden ist.

13. System (100) nach Anspruch 12, ferner umfassend eine zusätzliche Falle (102).

14. System (100) nach Anspruch 13, wobei mindestens eine von der Falle (102) und der zusätzlichen Falle (102) mindestens ein Einfangmaterial umfasst, wobei das mindestens eine Einfangmaterial aus der Gruppe ausgewählt ist, bestehend aus: Zeolithen, Molekularsieben, Silicagelen, porösen Gläsern, porösen Polymeren, Aktivkohlen, Rußen, Aluminiumoxid, porösen Metalloxiden, metallorganischen Gerüstverbindungen, Legierungen und Metallpulvern.

15. System (100) nach Anspruch 13 oder 14, wobei mindestens eine von der Falle (102) und der zusätzlichen Falle (102) mindestens ein Katalysatormaterial umfasst, wobei das mindestens eine Katalysatormaterial aus der Gruppe ausgewählt ist, bestehend aus: Aluminiumoxid und Nickel.

## Revendications

1. Procédé de concentration d'un échantillon de gaz, le procédé comprenant:
la préparation, au moyen d'un piège (102), d'un échantillon de gaz concentré à partir d'un échantillon de gaz non concentré, le piège (102) présentant une sortie de gaz (114) et délimitant un volume interne (116);
la régulation d'une température du volume interne (116) du piège (102) de manière à atteindre une température de désorption;
l'injection de l'échantillon de gaz concentré dans une ligne d'échantillonnage (106) en direction d'une boucle d'échantillonnage (108), la boucle d'échantillonnage (108) présentant une entrée de boucle d'échantillonnage (118) et une sortie de boucle d'échantillonnage (120), la ligne d'échantillonnage (106) et la boucle d'échantillonnage (108) étant à une pression inférieure à la pression atmosphérique; et
le fonctionnement de la boucle d'échantillonnage (108) pour libérer l'échantillon de gaz concentré contenu dans la boucle d'échantillonnage (108) dans le cadre d'un procédé chromatographique (122), le piège (102) n'étant pas disposé en ligne avec le procédé chromatographique (122),
**caractérisé en ce que**:
la ligne d'échantillonnage (106) est raccordée à la sortie de gaz (114) du piège (102) et à l'entrée de boucle d'échantillonnage (118) de la boucle d'échantillonnage (108); et
la sortie de boucle d'échantillonnage (120) de la boucle d'échantillonnage (108) est raccordée au procédé chromatographique (122).

2. Procédé selon la revendication 1, dans lequel ladite préparation de l'échantillon de gaz concentré à partir de l'échantillon de gaz non concentré comprend le chauffage du piège (102) jusqu'à atteindre une température de piégeage.

3. Procédé selon la revendication 2, dans lequel ladite préparation de l'échantillon de gaz concentré à partir de l'échantillon de gaz non concentré comprend la circulation de l'échantillon de gaz non concentré dans le piège (102) après ledit chauffage du piège (102) jusqu'à atteindre la température de piégeage, le procédé comprenant en outre le rinçage du piège (102) après ladite circulation de l'échantillon de gaz non concentré dans le piège (102).

4. Procédé selon la revendication 2 ou 3, dans lequel ladite préparation de l'échantillon de gaz concentré à partir de l'échantillon de gaz non concentré comprend l'isolement du piège (102).

5. Procédé selon l'une quelconque des revendications 1 à 4, comprenant en outre le conditionnement de la ligne d'échantillonnage (106) afin d'atteindre des conditions d'équilibre avant ladite régulation de la température du volume interne (116) du piège (102) afin d'atteindre la température de désorption.

6. Procédé selon l'une quelconque des revendications 1 à 5, comprenant en outre la détermination de paramètres d'échantillonnage de l'échantillon de gaz, lesdits paramètres d'échantillonnage comprenant au moins l'un parmi un temps d'échantillonnage, un débit d'échantillon et une pression.

7. Procédé selon l'une quelconque des revendications 1 à 6, dans lequel ladite régulation de la température du volume interne (116) comprend le chauffage du volume interne (116) du piège (102).

8. Procédé selon l'une quelconque des revendications 1 à 7, dans lequel ladite injection de l'échantillon de gaz concentré comprend la libération de l'échantillon de gaz concentré sous la forme d'une impulsion.

9. Procédé selon la revendication 8, dans lequel ledit fonctionnement de la boucle d'échantillonnage (108) comprend la libération d'une partie seulement de l'impulsion dans le procédé chromatographique (122), ladite partie de l'impulsion correspondant à la tranche la plus concentrée de l'impulsion.

10. Procédé selon l'une quelconque des revendications 1 à 9, comprenant en outre le nettoyage du piège (102).

11. Procédé selon l'une quelconque des revendications 1 à 10, comprenant en outre le nettoyage d'au moins l'un parmi la ligne d'échantillonnage (106) et la boucle d'échantillonnage (108), ledit nettoyage dudit au moins l'un parmi la ligne d'échantillonnage (106) et la boucle d'échantillonnage (108) comprenant l'isolement du piège (102) par rapport audit au moins l'un parmi la ligne d'échantillonnage (106) et la boucle d'échantillonnage (108), et le maintien dudit au moins l'un parmi la ligne d'échantillonnage (106) et la boucle d'échantillonnage (108) sous vide.

12. Système (100) destiné à concentrer un échantillon de gaz, le système (100) comprenant:
un piège (102) présentant un volume interne (116), une entrée de gaz (112) et une sortie de gaz (114), le piège (102) étant configuré pour recevoir un échantillon de gaz non concentré dans le volume interne (116) par l'intermédiaire de l'entrée de gaz (112), produire un échantillon de gaz concentré et délivrer l'échantillon de gaz concentré par l'intermédiaire de la sortie de gaz (114);
une enceinte à température régulée (104) logeant le piège (102) pour réguler la température du volume interne (116) du piège (102);
une ligne d'échantillonnage (106);
une boucle d'échantillonnage (108) présentant une entrée de boucle d'échantillonnage (118) et une sortie de boucle d'échantillonnage (120), la boucle d'échantillonnage (108) comprenant une vanne, la vanne étant configurée pour être actionnée afin de libérer l'échantillon de gaz concentré vers le procédé chromatographique (122), la ligne d'échantillonnage (106) et la boucle d'échantillonnage (108) étant à une pression inférieure à la pression atmosphérique, le piège (102) n'étant pas disposé en ligne avec le procédé chromatographique (122); et
une pompe (110) raccordée fonctionnellement à la boucle d'échantillonnage (108),
**caractérisé en ce que**:
la ligne d'échantillonnage (106) est raccordée à la sortie de gaz (114) du piège (102) et à l'entrée de boucle d'échantillonnage (118) de la boucle d'échantillonnage (108); et
la sortie de boucle d'échantillonnage (120) de la boucle d'échantillonnage (108) est raccordée au procédé chromatographique (122).

13. Système (100) selon la revendication 12, comprenant en outre un piège supplémentaire (102).

14. Système (100) selon la revendication 13, dans lequel au moins l'un parmi le piège (102) et le piège supplémentaire (102) comprend au moins un matériau de piégeage, ledit au moins un matériau de piégeage étant choisi dans le groupe constitué de: zéolithes, tamis moléculaires, gels de silice, verres poreux, polymères poreux, charbons activés, noirs de carbone, alumine, oxydes métalliques poreux, réseaux métallo-organiques, alliages et poudres métalliques.

15. Système (100) selon la revendication 13 ou 14, dans lequel au moins l'un parmi le piège (102) et le piège supplémentaire (102) comprend au moins un matériau catalytique, ledit au moins un matériau catalytique étant choisi dans le groupe constitué de: alumine et nickel.
